(19) Europäisches Patentamt
European Patent Office
Office européen des brevets

(11) **EP 4 636 701 A1**

(12) **EUROPEAN PATENT APPLICATION**
published in accordance with Art. 153(4) EPC

(43) Date of publication:
**22.10.2025 Bulletin 2025/43**

(51) International Patent Classification (IPC):
***G06T 11/40*** *(2006.01)*

(21) Application number: **24822378.6**

(22) Date of filing: **15.04.2024**

(86) International application number:
**PCT/CN2024/087793**

(87) International publication number:
**WO 2024/255423 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.06.2023 CN 202310687711**

(71) Applicant: **Tencent Technology (Shenzhen)
Company Limited
Shenzhen, Guangdong 518057 (CN)**

(72) Inventors:
• **XIANG, Jinxi**
 **Shenzhen, Guangdong 518057 (CN)**
• **LUO, Feng**
 **Shenzhen, Guangdong 518057 (CN)**
• **ZHANG, Jun**
 **Shenzhen, Guangdong 518057 (CN)**

(74) Representative: **Nederlandsch Octrooibureau
P.O. Box 29720
2502 LS The Hague (NL)**

(54) **IMAGE PROCESSING METHOD AND APPARATUS, AND COMPUTER DEVICE AND COMPUTER-READABLE STORAGE MEDIUM**

(57) An image processing method is performed by a computer device. The method includes: obtaining a sketch image, and extracting multi-scale texture features from the sketch image (S202); obtaining a preset noise image, and extracting multi-scale noise features from the noise image (S204); determining color information indicating coloring of the sketch image (S206); encoding, for each scale in the multi-scale, a noise feature with a scale of the multi-scale noise features according to a texture feature with the scale of the multi-scale texture features and the color information, to obtain multi-scale image features (S208); and performing multi-scale decoding on the multi-scale image features, to obtain a colored image having a sketch texture of the sketch image and having a color indicated by the color information (S210).

S202
Obtain a sketch image, and extract sketch texture features of multiple scales based on the sketch image

S204
Obtain a preset noise image, and extract noise features of the multiple scales from the preset noise image

S206
Determine color guide information corresponding to the sketch image

S208
Encode, for each scale among the multiple scales, the noise feature of the scale with reference to the sketch texture feature of the scale and the color guide information, to obtain image features of the multiple scales

S210
Perform multi-scale decoding on the image features of the multiple scales, to obtain a colored image, where the colored image has a sketch texture of the sketch image and has a color indicated by the color guide information

FIG. 2

EP 4 636 701 A1

**Description**

RELATED APPLICATION

This application claims priority to Chinese Patent Application No. 202310687711X, entitled "IMAGE PROCESSING METHOD AND APPARATUS, COMPUTER DEVICE, AND COMPUTER-READABLE STORAGE MEDIUM" and filed on June 12, 2023, which is incorporated herein by reference in its entirety.

FIELD OF THE TECHNOLOGY

This application relates to the field of computer technologies, and in particular, to an image processing method and apparatus, a computer device, a computer-readable storage medium, and a computer program product.

BACKGROUND OF THE DISCLOSURE

With the development of computer technologies, more users perform sketch drawing by using electronic devices. It is very important in a drawing process to color a drawn sketch. However, it usually takes much time to manually color the sketch. Therefore, a technology of automatically coloring a sketch emerges.

In a conventional mode of automatically coloring a sketch, generally, a user selects colors, designates image regions in the sketch, and automatically fills the image regions with the selected colors. However, in this mode, the colors are simply filled into the image regions, and the colors are defined between the image regions. Consequently, colors of a finally obtained image are not visually harmonious.

SUMMARY

According to embodiments provided in this application, an image processing method and apparatus, a computer device, a computer-readable storage medium, and a computer program product are provided.

According to an aspect, this application provides an image processing method, performed by a computer device. The method includes:

obtaining a sketch image, and extracting multi-scale texture features from the sketch image;

obtaining a preset noise image, and extracting multi-scale noise features from the noise image;

determining color information indicating coloring of the sketch image;

encoding, for each scale in the multi-scale, a noise feature with a scale of the multi-scale noise features according to a texture feature with the scale of the multi-scale texture features and the color information, to obtain multi-scale image features; and

performing multi-scale decoding on the multi-scale image features, to obtain a colored image having a sketch texture of the sketch image and having a color indicated by the color information.

According to another aspect, this application further provides an image processing apparatus. The apparatus includes:

a texture feature extraction module, configured to obtain a sketch image, and extract multi-scale texture features from the sketch image;

a noise feature extraction module, configured to obtain a preset noise image, and extracting multi-scale noise features from the noise image;

a color obtaining module, configured to determine color information indicating coloring of the sketch image;

an encoding module, configured to encode, for each scale in the multi-scale, a noise feature with a scale of the multi-scale noise features according to a texture feature with the scale of the multi-scale texture features and the color information, to obtain multi-scale image features; and

a decoding module, configured to perform multi-scale decoding on the multi-scale image features, to obtain a colored image having a sketch texture of the sketch image and having a color indicated by the color information.

According to another aspect, this application further provides a computer device. The computer device includes a memory and a processor. The memory has a computer program stored therein. The processor, when executing the computer program, implements the operations in the method embodiments of this application.

According to another aspect, this application further provides a computer-readable storage medium. The computer-readable storage medium has a computer program stored therein. The computer program, when executed by a processor, implements the operations in the method embodiments of this application.

According to another aspect, this application further provides a computer program product. The computer program product includes a computer program. The computer program, when executed by a processor, performs the operations in the method embodiments of this application.

According to another aspect, this application further provides a method for training an image processing model, performed by a computer device. The method includes:

obtaining a sample sketch image, and extracting sample multi-scale texture features from the sample sketch image;

obtaining a sample noise image, and extracting sample multi-scale noise features from the sample noise image;

determining sample color information indicating coloring of the sample sketch image;

encoding, for each scale in the multi-scale, a sample noise feature with a scale of the multi-scale noise features according to the sample texture feature with the scale of the multi-scale noise features and the sample color information, to obtain sample multi-scale image features;

performing multi-scale decoding on the sample multi-scale image features, to obtain a predicted colored image; and

obtaining a label colored image corresponding to the sample sketch image, and training an initial image processing model based on the predicted colored image and the label colored image, to obtain an image processing model, the label colored image having a sketch texture of the sample sketch image and having a color indicated by the sample color information.

According to another aspect, this application further provides an apparatus for training an image processing model. The apparatus includes:

a sample texture feature extraction module, configured to obtain a sample sketch image, and extracting sample multi-scale texture features from the sample sketch image;

a sample noise feature extraction module, configured to obtain a sample noise image, and extracting sample multi-scale noise features from the sample noise image;

a sample color obtaining module, configured to determine sample color information indicating coloring of the sample sketch image;

a sample encoding module, configured to encode, for each scale in the multi-scale, a sample noise feature with a scale of the multi-scale noise features according to the sample texture feature with the scale of the multi-scale noise features and the sample color information, to obtain sample multi-scale image features;

a sample decoding module, configured to perform multi-scale decoding on the sample multi-scale image features, to obtain a predicted colored image; and

a training module, configured to obtain a label colored image corresponding to the sample sketch image, and train an initial image processing model based on the predicted colored image and the label colored image, to obtain an image processing model, where the label colored image has a sketch texture of the sample sketch image and has a color indicated by the sample color information.

According to another aspect, this application further provides a computer device. The computer device includes a memory and a processor. The memory has computer-readable instructions stored therein. The processor, when executing the computer-readable instructions, implements the operations in the method embodiments of this application.

According to another aspect, this application further provides a computer-readable storage medium. The computer-readable storage medium has computer-readable instructions stored therein. The computer-readable instructions, when executed by a processor, implement the operations in the method embodiments of this application.

According to another aspect, this application further provides a computer program product. The computer program product includes a computer program. The computer program, when executed by a processor, performs the operations in the method embodiments of this application.

Details of one or more embodiments of this application are provided in the accompanying drawings and descriptions below. Other features and advantages of this application become clear with reference to the specification, the accompanying drawings, and the claims.

BRIEF DESCRIPTION OF THE DRAWINGS

To describe the technical solutions in embodiments of this application or the related art more clearly, the following briefly describes the accompanying drawings required for describing the embodiments or the related art. Apparently, the accompanying drawings in the following descriptions show merely some embodiments of this application, and a person of ordinary skill in the art may still derive other drawings from these accompanying drawings without creative efforts.

FIG. 1 is a diagram of an application environment of an image processing method in one embodiment.

FIG. 2 is a schematic flowchart of an image processing method in one embodiment.

FIG. 3 is a schematic diagram of a framework of an image processing model in one embodiment.

FIG. 4 is an architecture diagram of a color control unit in one embodiment.

FIG. 5 is a schematic diagram of a sketch image and a grid patch image in one embodiment.

FIG. 6 is a schematic flowchart of an operation of obtaining a layer patch image in one embodiment.

FIG. 7 is a schematic diagram of a sketch image and an initial layer patch image in one embodiment.

FIG. 8 is a schematic diagram of a layer patch image in one embodiment.

FIG. 9 is a schematic flowchart of a method for training an image processing model in one embodiment.

FIG. 10 is a schematic diagram of a difference between a conventional diffusion model and an initial image processing model in one embodiment.

FIG. 11 is a schematic diagram of a network structure of increasing sketch control branches in one embodiment.

FIG. 12 is a schematic diagram of a colored image generated with no custom palette image in one embodiment.

FIG. 13 is a schematic diagram of a colored image generated in combination with a grid patch image in one embodiment.

FIG. 14 is a schematic diagram of a colored image generated in combination with a layer patch image in one embodiment.

FIG. 15 is a schematic diagram of an application scenario of an image processing method in one embodiment.

FIG. 16 is a structural block diagram of an image processing apparatus in one embodiment.

FIG. 17 is a structural block diagram of an apparatus for training an image processing model in one embodiment.

FIG. 18 is a diagram of an internal structure of a computer device in one embodiment.

DESCRIPTION OF EMBODIMENTS

The technical solutions in embodiments of this application are clearly and completely described in the following with reference to the accompanying drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

The embodiments of this application may be applied to various scenes, including but not limited to a cloud technology, artificial intelligence (AI), intelligent transportation, and assisted driving. For example, the embodiments of this application may be applied to the field of an AI technology. AI is a theory, method, technology, and application system that uses a digital computer or a machine controlled by the digital computer to simulate, extend, and expand human intelligence, perceive an environment, acquire knowledge, and use knowledge to obtain an optimal result. In other words, AI is a comprehensive technology in computer science and attempts to understand the essence of intelligence and produce a new intelligent machine that can react in a manner similar to human intelligence. AI is to study the design principles and implementation methods of various intelligent machines, to enable the machines to have the functions of perception, reasoning, and decision-making. The solutions provided in the embodiments of this application relate to an AI image processing method and a method for training an image processing model, which are specifically described by using the following embodiments.

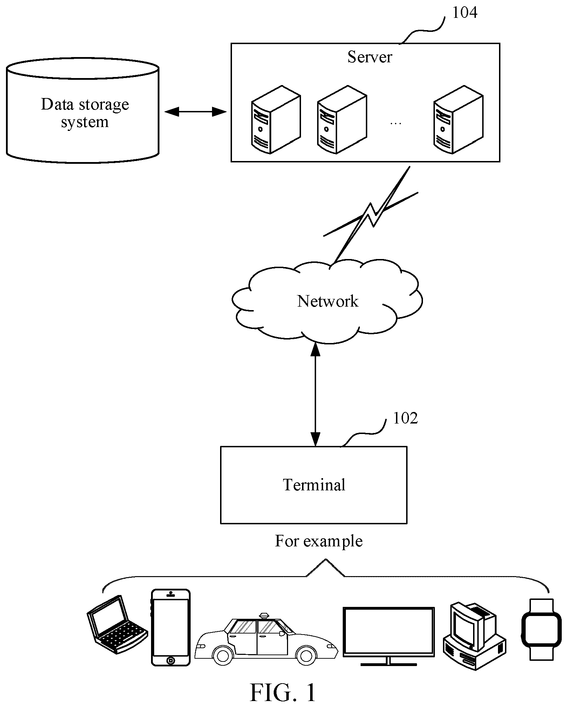

An image processing method provided in an embodiment of this application may be applied to an application environment as shown in FIG. 1. A terminal 102 communicates with a server 104 via a network. A data storage system may store data to be processed by the server 104. The data storage system may be integrated on the server 104, or may be placed on a cloud or another server. Both the terminal 102 and the server 104 may be separately configured to execute the image processing method provided in this embodiment of this application. The terminal 102 and the server 104 may further be cooperatively configured to execute the image processing method provided in this embodiment of this application. When the terminal 102 and the server 104 are cooperatively configured to execute the image processing method provided in this embodiment of this application, the terminal 102 obtains a sketch image and transmits the sketch image to the server 104. The server 104 extracts sketch texture features of multiple scales from the sketch image. The server 104 obtains a preset noise image, and extracts noise features of the multiple scales from the preset noise image. The terminal 102 determines color guide information corresponding to the sketch image and transmits the color guide information to the server 104. The server 104 encodes, for each scale among the multiple scales, the noise feature of the scale with reference to the sketch texture feature of the scale and the color guide information, to obtain image features of the multiple scales. The server 104 performs multi-scale decoding on the image features of the multiple scales, to obtain a colored image. The colored image has a sketch texture of the sketch image and has a color indicated by the color guide information. The server 104 returns the colored image to the terminal 102. The terminal 102 may be, but is not limited to, various desktop computers, notebook computers, smartphones, tablet computers, Internet of Things devices, and portable wearable devices. The Internet of Things device may be a smart speaker, a smart television, a smart air conditioner, a smart in-vehicle device, or the like. The portable wearable device may be a smart watch, a smart band, a head-mounted device, or the like. The server 104 may be implemented by using an independent server or a server cluster including a plurality of servers.

A method for training an image processing model provided in an embodiment of this application may be applied to an application environment as shown in FIG. 1. Both the terminal 102 and the server 104 may be separately configured to execute the method for training an image processing model provided in this embodiment of this application. The terminal 102 and the server 104 may further be cooperatively configured to execute the method for training an image processing model provided in this embodiment of this application. When the terminal 102 and the server 104 are cooperatively configured to execute the method for training an image processing model provided in this embodiment of this application, the terminal 102 obtains a sample sketch image and a sample noise image from the server 104. The terminal 102 extracts sample sketch texture features of multiple scales from the sample sketch image. The terminal 102 extracts sample noise features of the multiple scales from the sample noise image. The terminal 102 obtains, from the server 104, sample color guide information corresponding to the sample sketch image. The terminal 102 encodes, for each scale among the multiple scales, the sample noise feature of the scale with reference to the sample sketch texture feature of the scale and the sample color guide information, to obtain sample image features of the multiple scales. The terminal 102 performs multi-scale decoding on the sample image features of the multiple scales, to obtain a predicted colored image. The terminal 102 obtains a label colored image corresponding to the sample sketch image, and trains an initial image processing model based on the predicted colored image and the label colored image, to obtain an image processing model. The label colored image has a sketch texture of the sample sketch image and has a color indicated by the sample color guide information. The image processing model may be deployed on the terminal 102 or the server 104.

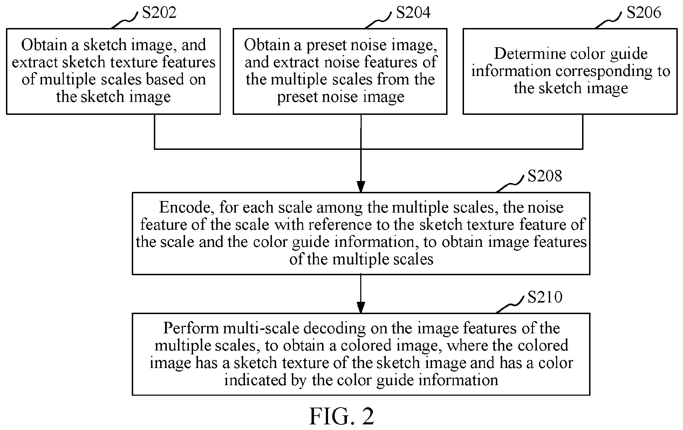

In one embodiment, as shown in FIG. 2, an image processing method is provided. An example in which the method is applied to a computer device (the computer device may be the terminal or the server in FIG. 1) in FIG. 1 is used for description. The method includes the following operations.

Operation S202: obtain a sketch image, and extract multi-scale texture features from the sketch image; in embodiments of the present application, operation S202 can also include following operations: obtain a sketch image, and extract sketch texture features of multiple scales (namely, multi-scale sketch texture features) from the sketch image.

The sketch image is an image that is formed by lines and is not colored. The sketch texture features refer to features capable of representing a texture structure in the sketch image.

In this embodiment, the computer device obtains a sketch image to be colored, and performs feature extraction on the sketch image, to obtain sketch texture features of multiple scales.

In this embodiment, the image processing model performs feature extraction on the sketch image, to obtain the sketch texture features of the multiple scales.

In this embodiment, the image processing model includes a sketch control unit and a color control unit. The computer device inputs the sketch image to the sketch control unit, and performs feature extraction on the sketch image by using the sketch control unit, to obtain the sketch texture features of the multiple scales.

Operation S204: Obtain a preset noise image, and extract multi-scale noise features from the noise image; Operation S204: Obtain a preset noise image, and extract noise features of the multiple scales (namely, multi-scale noise features) from the preset noise image.

The preset noise image is a preset pure noise image, for example, may be a noise image formed by a Gaussian noise, but is not limited thereto. The multiple scales are multiple different scales, for example, $64 \times 64$ pixels, $32 \times 32$ pixels, $16 \times 16$, $8 \times 8$ , and the like, and multi-scale features are features obtained or extracted of the multiple different scales.

In this embodiment, the computer device obtains a preset noise image, and performs feature extraction on the preset noise image, to obtain noise features of the multiple scales.

In this embodiment, the preset noise image may be a noise image pre-stored in the image processing model. Feature extraction is performed on the preset noise image by using the image processing model, to obtain the noise features of the multiple scales. Further, a scale quantity corresponding to the sketch texture features of the multiple scales is the same as a scale quantity corresponding to the noise features of the multiple scales. For example, sketch texture features of five scales of the sketch image are extracted, noise features of five scales of the preset noise image are extracted, and the scale quantity is 5. In embodiments of the present application, features extracted from a sketch image are referred to as multi-scale texture features, and features extracted from a noise image are referred to as multi-scale noise features.

In one embodiment, the computer device obtains noise features extracted from the preset noise image, and encodes, for each scale among the multiple scales, the noise feature at the scale with reference to the sketch texture feature of the scale and the color guide information, to obtain image features of the multiple scales.

Further, the obtaining noise features extracted from the preset noise image includes: obtaining noise features of the multiple scales extracted from the preset noise image. The encoding, for each scale among the multiple scales, the noise feature at the scale with reference to the sketch texture feature of the scale and the color guide information, to obtain image features of the multiple scales includes: encoding, for each scale among the multiple scales, the noise feature of the scale with reference to the sketch texture feature of the scale and the color guide information, to obtain image features of the multiple scales.

Operation S206: determine color information indicating coloring of the sketch image; in embodiments of the present application, operation S206 can also include following operations: determine color guide information (namely, color information) corresponding to the sketch image.

The color guide information is information for guiding coloring of the sketch image. The color guide information is configured for defining a color of the sketch image, and may be specifically color information customized by a user for the sketch image. The color information customized by the user for the sketch image may be a color customized for at least one grid region in the sketch image. The color information customized by the user for the sketch image may include a custom palette image formed by custom color filling, or may be a color description text for the sketch image.

In this embodiment, the computer device obtains the color guide information customized by the user for the sketch image, or randomly obtains one color random seed from a plurality of preset color random seeds as the color guide information. The color random seed may include one or more colors. Colors corresponding to different contents in the image may be set in the color random seed. For example, plants correspond to green, and sky and sea water correspond to blue. However, this is not limited thereto.

In this embodiment, the computer device may obtain a color description text as the color guide information. The color description text is configured for describing a color of the sketch image, and may be specifically describing a color of at least a part of content in the sketch image. To be specific, the color description text may be a text customized by the user for the color of the sketch image. For example, a cat and a dog are depicted in the sketch image. The color description text describes that the cat is white and the dog is yellow, and a subsequently generated colored image includes the white cat and the yellow dog.

In this embodiment, the computer device may obtain a custom palette image corresponding to the sketch image as the color guide information. The custom palette image is an image obtained by the user by customizing the color of the sketch image.

Operation S208: Encode, for each scale in the multi-scale, a noise feature with a scale of the multi-scale noise features according to a texture feature with the scale of the multi-scale texture features and the color information, to obtain multi-scale image features; in embodiments of the present application, operation S208 can also include following operations: encode, for each scale among the multiple scales, the noise feature of the scale with reference to the sketch texture feature of the scale and the color guide information, to obtain image features of the multiple scales.

The image feature is a feature formed by combining the sketch texture feature and a color indicated by the color guide information. The image feature of each scale among the image features of the multiple scales is combined with the image feature of a previous scale.

In this embodiment, the computer device determines the color indicated by the color guide information. The computer device encodes, for each scale among the multiple scales, the noise feature of the scale with reference to the sketch texture feature of the scale and the color indicated by the color guide information, to obtain image features of the multiple scales.

Further, the encoding, for each scale among the multiple scales, the noise feature of the scale with reference to the sketch texture feature of the scale and the color guide information, to obtain image features of the multiple scales includes:

encoding, for each scale among the multiple scales and in a case that the scale is a first scale among the multiple scales, the noise feature of the scale with reference to the sketch texture feature of the scale and the color guide information, to obtain an image feature of the scale; and

encoding, in a case that the scale is not the first scale among the multiple scales, the noise feature of the scale with reference to the sketch texture feature of the scale, the color guide information, and the image feature of a previous scale of the scale, to obtain the image feature of the scale.

In this embodiment, for each scale among the multiple scales, in a case that the scale is a first scale among the multiple scales, the sketch texture feature of the scale, the color feature of the color guide information, and the noise feature of the scale are combined, to obtain the image feature of the scale.

In a case that the scale is not the first scale among the multiple scales, the sketch texture feature of the scale, the color feature of the color guide information, the image feature of a previous scale of the scale, and the noise feature of the scale are combined, to obtain the image feature of the scale.

In this embodiment, the encoding, for each scale among the multiple scales, the noise feature of the scale with reference to the sketch texture feature of the scale and the color guide information, to obtain image features of the multiple scales includes: extracting a color feature from the color guide information; and combining, for each scale among the multiple scales, the color feature, the sketch texture feature of the scale, and the noise feature of the scale, to obtain the image feature of the scale, thereby obtaining the image features of the multiple scales.

Operation S210: Perform multi-scale decoding on the multi-scale image features, to obtain a colored image having a sketch texture of the sketch image and having a color indicated by the color information; in embodiments of the present application, operation S210 can also include following operations: perform multi-scale decoding on the image features of the multiple scales, to obtain a colored image, where the colored image has a sketch texture of the sketch image and has a color indicated by the color guide information (namely, color information).

In this embodiment, the computer device performs multi-scale decoding on the image features of the multiple scales, and obtains a colored image after decoding of the last scale is completed. The colored image has a sketch texture of the sketch image and has a color indicated by the color guide information.

In this embodiment, for each scale in the multi-scale decoding, a decoding feature of a previous scale of the scale is decoded with reference to the image feature of the scale, to obtain a decoding feature of the scale. Decoding of a next scale is performed. The obtained decoding feature of the scale is used as a decoding feature of a previous scale in the decoding of the next scale, the operation of decoding a decoding feature of a previous scale of the scale is returned and continuously performed, until a colored image is obtained after decoding of the last scale is performed.

In this embodiment, an encoding order of the multiple scales during encoding is opposite to a decoding order of the multiple scales during decoding.

In this embodiment, a sketch image is obtained, and sketch texture features of multiple scales are extracted based on the sketch image. The extracted sketch texture feature of a large scale includes more low-level semantic features. The sketch texture feature of a small scale includes more high-level semantic features. Noise features of the multiple scales extracted from a preset noise image are obtained, so that feature extraction of multiple identical scales is performed on the sketch image and the preset noise image, and the sketch texture features of the multiple scales and color guide information corresponding to the sketch image are used as guide information for encoding the noise features. For each scale among the multiple scales, the noise feature of the scale is encoded with reference to the sketch texture feature of the scale and the color guide information, so that the sketch texture feature and the color indicated by the color guide information can be combined during encoding, and an image feature having the sketch texture feature and the indicated color is obtained. In addition, combination of the sketch texture and the color contributes to that a color change in a generated image conforms to a direction of the sketch texture.

The encoding is multi-scale, and an image feature in which sketch texture features of different scales and an indicated color are combined can be obtained, to perform multi-scale decoding on the image features of the multiple scales, so that different layers of texture are focused on in a decoding process, and a colored image with a clearer sketch texture and finer edge transition details can be generated. In addition, matching between a color in the colored image and the sketch texture is more harmonious, thereby improving image quality of the colored image.

In one embodiment, the color guide information includes a custom palette image, and the custom palette image is configured for customizing a color of the sketch image. The encoding, for each scale among the multiple scales, the noise feature of the scale with reference to the sketch texture feature of the scale and the color guide information, to obtain image features of the multiple scales includes:

extracting a palette feature of the custom palette image; and encoding, for each scale among the multiple scales, the noise feature of the scale with reference to the sketch texture feature of the scale and the palette feature, to obtain the image features of the multiple scales.

The custom palette image is a palette image formed by the user performing color customization on the sketch image. To be specific, the custom palette image is configured for the user to customize a color of the sketch image.

In this embodiment, the user may perform color customization on the sketch image, to obtain the custom palette image corresponding to the sketch image. The computer device performs feature extraction on the custom palette image, to obtain a palette feature corresponding to the custom palette image.

The computer device encodes, for each scale among the multiple scales, the noise feature of the scale with reference to the sketch texture feature of the scale and the palette feature, to obtain the image feature of the scale. According to similar processing, the image features of the multiple scales may be obtained.

In this embodiment, for each scale among the multiple scales, in a case that the scale is a first scale among the multiple scales, the sketch texture feature of the scale, the palette feature, and the noise feature of the scale are combined, to obtain the image feature of the scale.

In a case that the scale is not the first scale among the multiple scales, the sketch texture feature of the scale, the palette feature, the image feature of a previous scale of the scale, and the noise feature of the scale are combined, to obtain the image feature of the scale, thereby obtaining the image features of the multiple scales.

In this embodiment, the custom palette image is a palette image in which a user defines a color of the sketch image. Feature extraction is performed on the user-defined palette image, to obtain a palette feature corresponding to the custom palette image. For each scale among the multiple scales, the noise feature of the scale is encoded with reference to the sketch texture feature of the scale and the palette feature. The noise feature can be encoded into an image feature in which the sketch texture feature and the palette feature are combined. Therefore, the sketch image and corresponding color information can be used as guide information, so that an image having a sketch texture expected by the user and a custom color is generated from the preset noise image. In addition, encoding for multiple scales is performed, and the obtained image features of the multiple scales can include sketch textures and shallow information and deep information of colors, so that an image texture generated by decoding is clearer and finer, and colors are more harmonious.

In one embodiment, the extracting a palette feature of the custom palette image includes: extracting palette features of at least two different scales from the custom palette image, where a scale quantity corresponding to the at least two different scales is less than a scale quantity corresponding to the multiple scales.

The encoding, for each scale among the multiple scales, the noise feature of the scale with reference to the sketch texture feature of the scale and the palette feature, to obtain the image features of the multiple scales includes:

encoding, for each scale among the multiple scales and in the presence of a palette feature of the scale, the noise feature of the scale with reference to the sketch texture feature of the scale and the palette feature, to obtain the image feature of the scale; and encoding, in the absence of the palette feature of the scale, the noise feature of the scale with reference to the sketch texture feature of the scale, to obtain the image feature of the scale.

The scale quantity represented by the at least two different scales is less than the scale quantity represented by the multiple scales. For example, the at least two different scales specifically refer to three scales, and the multiple scales specifically refer to five scales. A scale quantity corresponding to the sketch texture features of the multiple scales is the same as a scale quantity corresponding to the noise features of the multiple scales.

In this embodiment, the computer device performs feature extraction on the custom palette image, to obtain palette features of the at least two different scales corresponding to the custom palette image. Further, the computer device extracts a feature of a first scale from the custom palette image, to obtain a palette feature of the first scale. Feature processing of a next scale is performed on the palette features of the first scale, to obtain feature processing of the next scale. According to similar processing, palette features of different scales may be obtained.

For the image features of the multiple scales, the noise features of the multiple scales, and the palette features of the different scales, the computer device determines, for each scale among the multiple scales, whether the palette feature of the scale is present. In the presence of the palette feature of the scale, the computer device encodes the noise feature of the scale with reference to the sketch texture feature of the scale and the palette feature, to obtain the image feature of the scale, thereby obtaining an image feature in which the palette feature and the sketch texture feature are combined.

In the absence of the palette feature of the scale, the noise feature of the scale is encoded with reference to the sketch texture feature of the scale, to obtain the image feature of the scale, thereby obtaining an image feature in which the sketch texture feature is combined.

In this embodiment, colors and textures belong to semantics of different levels. The colors belong to low-level semantics, and the textures belong to high-level semantic information. Therefore, features of fewer scales may be extracted for the colors, and features of more scales may be extracted for the sketch texture of the sketch image. For each scale among the multiple scales, in the presence of a palette feature of the scale, the noise feature of the scale is encoded with reference to the sketch texture feature of the scale and the palette feature, so that the sketch texture feature and the palette feature can be used as guide information, to indicate that the sketch texture feature and the palette feature are combined during encoding based on the noise feature, thereby obtaining an image feature of the scale in which the sketch texture feature and the palette feature of the corresponding scale are combined. In the absence of the palette feature of the scale, the noise feature of the scale is encoded with reference to the sketch texture feature of the scale, to use the sketch texture feature as guide information, to indicate that the sketch texture feature is combined during encoding based on the noise feature, thereby obtaining an image feature of the scale in which the sketch texture feature of the corresponding scale is combined. The image feature in which the sketch textures and the colors of different levels are combined this time can be configured for performing image reconstruction more accurately, so that sketch textures in a colored image obtained by reconstruction is clearer and finer, and colors are more harmonious and natural, thereby improving image quality.

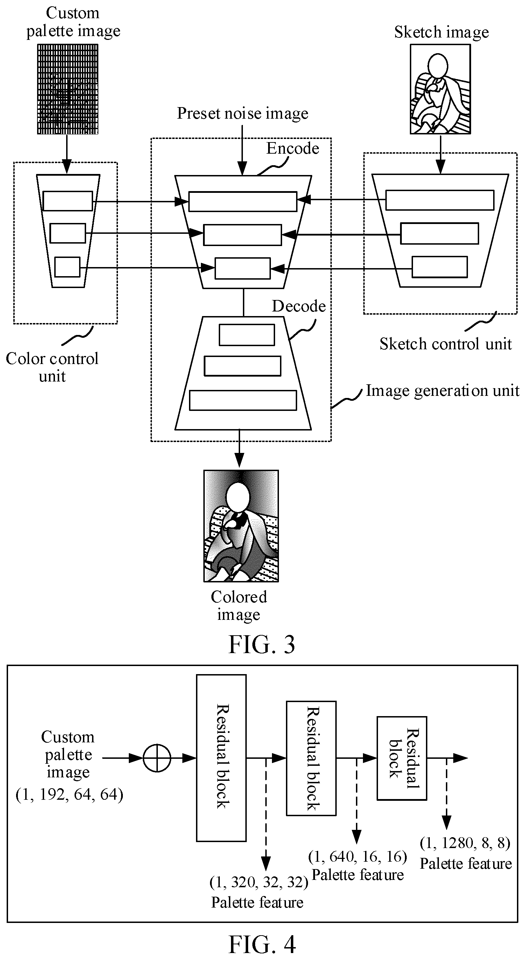

In one embodiment, the image processing method is performed by using an image processing model. The image processing model includes a sketch control unit, a color control unit, and an image generation unit. A framework of the image processing model is shown in FIG. 3. The sketch control unit extracts sketch texture features of multiple scales from the sketch image. The color control unit extracts palette features of different scales from the custom palette image. The image generation unit extracts noise features of the multiple scales from the preset noise image. The sketch texture features of the multiple scales and the palette features of the different scales are inputted into the image generation unit, and are encoded with noise features of the corresponding scales, to obtain image features of the multiple scales. The image features of the multiple scales are decoded in the image generation unit, to obtain a colored image.

FIG. 4 shows an architecture diagram of a color control unit in one embodiment. The color control unit includes a plurality of residual blocks. The palette features of the different scales can be extracted from the custom palette image by using the plurality of residual blocks. A quantity of the residual blocks in the color control unit may be set according to requirements.

In a training process of the image processing model, an input of the color control unit further includes a time sequence feature time embedding.

In one embodiment, the custom palette image includes a grid patch image corresponding to the sketch image. The method further includes:

obtaining a palette template divided according to grid patches, and performing grid division on the sketch image according to the grid patches divided by the palette template, to obtain grid regions in the sketch image, where the grid patches in the sketch image are in a one-to-one correspondence with the grid regions in the sketch image; obtaining a grid patch image corresponding to the palette template, where the grid patch image is obtained by performing custom color filling on each grid patch in the palette template, and the grid patch is configured for defining a color of the corresponding grid region in the sketch image.

The colored image has the sketch texture of the sketch image, and each grid region in the colored image has a color filled by the corresponding grid patch in the grid patch image.

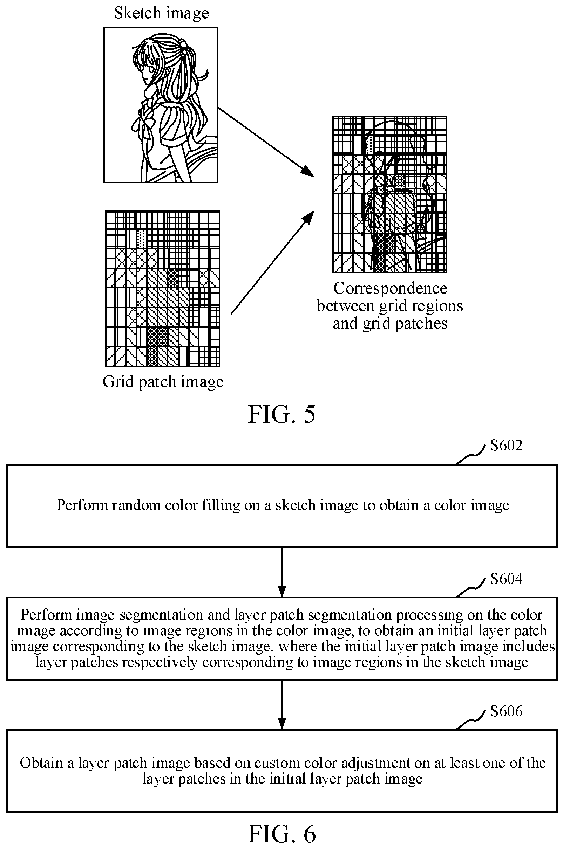

In this embodiment, the computer device obtains a palette template. The palette image is divided according to the grid patches. A size of the palette template is the same as a size of the sketch image. The computer device performs grid division on the sketch image according to the grid patches divided by the palette template, to obtain grid regions in the sketch image, so that each grid region represents one image content in the sketch image, and each grid patch corresponds to one grid region in the sketch image. To be specific, the grid patches in the sketch image are in a one-to-one correspondence with the grid regions in the sketch image. The sketch image and the corresponding grid patch image are shown in FIG. 5. FIG. 5 further shows a correspondence between grid regions in a sketch image and grid patches in a grid patch image.

The user may fill a color in each grid patch of the palette template, to customize a color of the grid region corresponding to the grid patch, so that an image content represented by the grid region in a subsequently generated colored image can be displayed as the color filled in the grid patch.

The user performs custom color filling on each grid patch in the palette template, to form a grid patch image. The computer device obtains the grid patch image, and performs feature extraction on the grid patch image, to obtain a grid patch feature corresponding to the grid patch image. The grid patch feature may be used as the palette feature. For each scale among the multiple scales, the noise feature of the scale is encoded with reference to the sketch texture feature of the scale and the palette feature, to obtain the image features of the multiple scales.

The computer device performs multi-scale decoding on the image features of the multiple scales, to obtain a colored image. The colored image has the sketch texture of the sketch image, and the grid regions in the colored image have colors filled by the corresponding grid patches in the grid patch image.

In this embodiment, when the size of the sketch image is different from the size of the palette template, the sketch image and the palette template are adjusted to be of a same size. At the same size, the sketch image is divided according to grids into which the sketch image is divided, to obtain the grid regions in the sketch image.

The size adjustment may be adjusting the size of the sketch image to be the same as the size of the palette template, or adjusting the size of the palette template to be the same as the size of the sketch image, or adjusting both the size of the sketch image and the size of the palette template.

In this embodiment, a palette template divided according to grid patches is obtained, and grid division is performed on the sketch image according to the grid patches divided by the palette template, to obtain grid regions representing image regions in the sketch image, so that the grid patches in the sketch image are in a one-to-one correspondence with the grid regions in the palette template, and a user can define a color of each image region in the sketch image by filling the grid patch with a color, thereby effectively implementing that the user defines the color of the sketch image. In addition, the user-defined color is subsequently used as guide information during feature encoding and decoding, so that a finally generated colored image not only has a sketch texture of the sketch image, but grid regions in the colored image further have colors filled by the user in the corresponding grid patches, thereby effectively generating a sketch image of a custom color.

In one embodiment, the custom palette image includes a layer patch image corresponding to the sketch image. The method further includes:

performing random color filling on the sketch image to obtain a color image; and performing layer patch segmentation on the color image according to image regions in the color image, to obtain the layer patch image corresponding to the sketch image, where the layer patch image includes a layer patch corresponding to each image region. The colored image has the sketch texture of the sketch image, and the image regions in the colored image have colors indicated by the corresponding layer patches in the layer patch image.

In this embodiment, the computer device may automatically perform random color filling on the sketch image to obtain a color image. The color image includes at least two colors. Further, the user may customize to perform random color filling on the sketch image, to obtain a color image.

The computer device determines image regions in the color image, and performs layer patch segmentation on the color image according to the image regions in the color image, to obtain a layer patch image corresponding to the sketch image. The layer patch image includes a plurality of layer patches. The plurality of layer patches in the layer patch image are in a one-to-one correspondence with the plurality of image regions in the color image.

The layer patch represents a color of the corresponding image region. Adjacent layer patches among the layer patches have different colors.

The computer device may extract a layer patch feature of the layer patch image. The layer patch feature may be used as the palette feature. For each scale among the multiple scales, the noise feature of the scale is encoded with reference to the sketch texture feature of the scale and the palette feature, to obtain the image features of the multiple scales.

In this embodiment, random color filling is performed on the sketch image, to obtain a color image, so that layer patch segmentation can be performed on the color image according to image regions in the color image, to accurately segment layer patches in the color image. The layer patches form a layer patch image corresponding to the color image, and a feature of the layer patch image is extracted, to obtain a palette feature, so that the palette feature is used as color guide information during feature encoding and decoding, a finally generated colored image not only has a sketch texture of the sketch image, but image regions in the colored image further have colors defined by the corresponding layer patches, thereby quickly implementing coloring of the sketch image.

In one embodiment, the performing layer patch segmentation on the color image according to image regions in the color image, to obtain the layer patch image corresponding to the sketch image includes:

performing layer patch segmentation on the color image according to the image regions in the color image, to obtain an initial layer patch image, where the initial layer patch image includes layer patches corresponding to the image regions; and obtaining the layer patch image based on custom color adjustment on at least one of the layer patches in the initial layer patch image.

In this embodiment, the computer device determines image regions in the color image, and performs layer patch segmentation on the color image according to the image regions in the color image, to obtain an initial layer patch image corresponding to the sketch image. The initial layer patch image includes a plurality of layer patches. The plurality of layer patches in the initial layer patch image are in a one-to-one correspondence with the plurality of image regions in the color image.

The user may adjust colors of the layer patches in the initial layer patch image, to adjust the colors to desired colors of the user. The computer device obtains an adjusted layer patch image based on user-defined color adjustment.

In this embodiment, the layer patch represents a color of the corresponding image region. Adjacent layer patches among the layer patches have different colors.

In this embodiment, layer patch segmentation is performed on the color image to accurately segment the layer patches in the color image, and the layer patches form the initial layer patch image corresponding to the color image. The initial layer patch image includes layer patches respectively corresponding to the image regions in the sketch image. A user may adjust colors of the layer patches to redefine a desired color, thereby obtaining a user-defined layer patch image. In addition, the user-defined color is subsequently used as guide information during feature encoding and decoding, so that a finally generated colored image not only has a sketch texture of the sketch image, but image regions in the colored image further have colors filled by the user in the corresponding layer patches, thereby effectively generating a sketch image of a custom color.

In one embodiment, as shown in FIG. 6, the custom palette image includes a layer patch image corresponding to the sketch image. The method further includes:

Operation S602: Perform random color filling on the sketch image to obtain a color image.

In this embodiment, the computer device may automatically perform random color filling on the sketch image to obtain a color image.

The color image includes at least two colors.

Operation S604: Perform layer patch segmentation on the color image according to the image regions in the color image, to obtain an initial layer patch image corresponding to the sketch image, where the initial layer patch image includes layer patches corresponding to the image regions in the sketch image.

In this embodiment, the computer device determines image regions in the color image, and performs layer patch segmentation on the color image according to the image regions in the color image, to obtain an initial layer patch image corresponding to the color image. The initial layer patch image represents colors of the image regions in the color image.

The initial layer patch image includes layer patches respectively corresponding to the image regions in the sketch image. The layer patches represent colors of the corresponding image regions. Adjacent layer patches among the layer patches have different colors.

The initial layer patch image corresponding to the color image is the initial layer patch image corresponding to the sketch image. The initial layer patch image represents colors of the image regions in the color image. To be specific, the initial layer patch image includes layer patches respectively corresponding to the image regions in the sketch image.

Operation S606: Obtain the layer patch image based on custom color adjustment on at least one of the layer patches in the initial layer patch image.

The colored image has the sketch texture of the sketch image, and the image regions in the colored image have colors indicated by the corresponding layer patches in the layer patch image.

In this embodiment, the user may adjust colors of the layer patches in the initial layer patch image, to adjust the colors to desired colors of the user. The computer device obtains an adjusted layer patch image based on user-defined color adjustment.

For example, image segmentation is performed on a color image A to obtain an initial layer patch image B. The initial layer patch image B includes layer patches 1, 2, and 3. Each layer patch represents a color of a corresponding image region of the color image A. The user adjusts a color of at least one of the layer patches 1, 2, and 3, to obtain color-adjusted layer patches 1, 2, and 3. The color-adjusted layer patches 1, 2, and 3 form a layer patch image C.

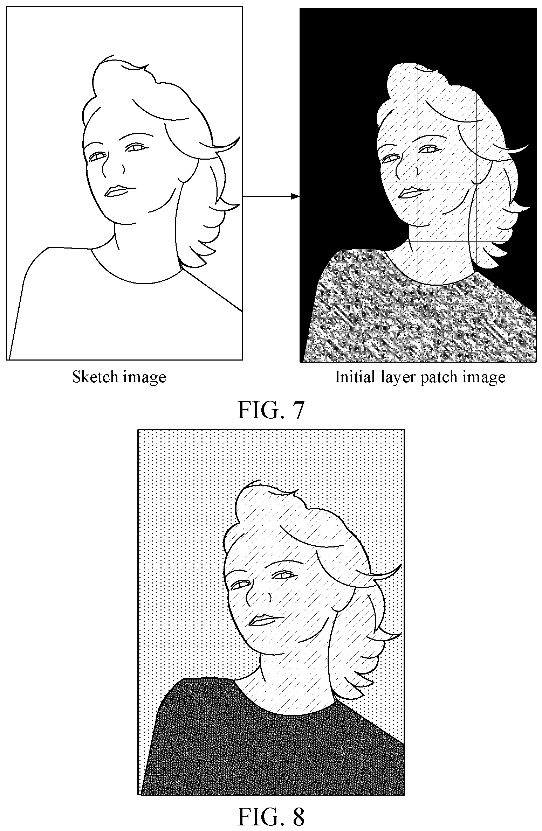

As shown in FIG. 7, a sketch image and an initial layer patch image corresponding to the sketch image are provided. After the user performs color adjustment on layer patches in the initial layer patch image, a layer patch image shown in FIG. 8 is obtained.

The computer device performs feature extraction on the layer patch image, to obtain a corresponding layer patch feature. The layer patch feature may be used as the palette feature. For each scale among the multiple scales, the noise feature of the scale is encoded with reference to the sketch texture feature of the scale and the palette feature, to obtain the image features of the multiple scales.

In this embodiment, random color filling is performed on the sketch image, to obtain a color image, so that layer patch segmentation can be performed on the color image according to image regions in the color image, to accurately segment layer patches in the color image. The layer patches form an initial layer patch image corresponding to the color image. The initial layer patch image includes layer patches respectively corresponding to the image regions in the sketch image. A user may adjust colors of the layer patches to redefine a desired color, thereby obtaining a user-defined layer patch image. In addition, the user-defined color is subsequently used as guide information during feature encoding and decoding, so that a finally generated colored image not only has a sketch texture of the sketch image, but image regions in the colored image further have colors filled by the user in the corresponding layer patches, thereby effectively generating a sketch image of a user-defined color.

In one embodiment, the method further includes:

obtaining an image description text for the sketch image; and extracting an image description feature from the image description text.

The encoding, for each scale among the multiple scales, the noise feature of the scale with reference to the sketch texture feature of the scale and the color guide information, to obtain image features of the multiple scales includes:

encoding, for each scale among the multiple scales, the noise feature of the scale with reference to the sketch texture feature of the scale, the color guide information, and the image description feature, to obtain image features of the multiple scales.

The image description text is configured for describing a feature of the sketch image. For example, if there is a sun in the sketch image, but lines are relatively blurry, the sun in the sketch image and a position of the sun in the image may be described by using an image description text "there is a sun at an upper left of an image". The image description text can provide corresponding description information for a sketch image that is not clear enough, and is used as a supplement to at least a part of content in the sketch image, so that a subsequently generated colored image is clearer.

The image description text may alternatively define content in the sketch image. For example, the sketch image does not have a sun, and the image description text is "there is a sun at an upper left of an image", so that the sun exists at the upper left of a subsequently generated colored image.

In this embodiment, the computer device obtains an image description text for the sketch image, and performs feature extraction on the image description text, to obtain an image description feature corresponding to the image description text. The computer device encodes, for each scale among the multiple scales, the noise feature of the scale with reference to the sketch texture feature of the scale, the color guide information, and the image description feature, to combine the sketch texture feature, the color indicated by the color guide information, and the image description feature, to obtain an image feature in which these features are combined, thereby obtaining the image features of the multiple scales.

In this embodiment, an image description text for the sketch image is obtained, to describe features of the sketch image by using the image description text, as supplementary information of the sketch image. An image description feature in the image description text is extracted. For each scale among the multiple scales, the noise feature of the scale is encoded with reference to the sketch texture feature of the scale, the color guide information, and the image description feature, so that an image feature obtained by encoding combines a sketch texture of the corresponding scale and a color indicated by the sketch texture feature. In addition, the image feature obtained by encoding further has feature information described by the image description feature, so that an image content not in the sketch image is obtained during encoding, or an originally unclear feature in the sketch image is changed to a clear feature with reference to the image description feature. In addition, encoding for multiple scales is performed, to obtain image features of the multiple scales. An image feature of a larger scale has more deep image information, and an image feature of a smaller scale has more shallow image information, so that image information of different levels can be obtained.

In one embodiment, the performing multi-scale decoding on the image features of the multiple scales, to obtain a colored image includes:

decoding, for each scale in the multi-scale decoding and in a case that the scale is a first scale in the multi-scale decoding, the image feature of a last scale obtained by encoding with reference to the image feature of the scale, to obtain a decoding feature of the scale;

decoding, in a case that the scale is not the first scale or the last scale in the multi-scale decoding, a decoding feature of a previous scale of the scale with reference to the image feature of the scale, to obtain a decoding feature of the scale; and

decoding, in a case that the scale is the last scale, a decoding feature of a previous scale of the last scale with reference to the image feature of the scale, to obtain the colored image.

In this embodiment, the computer device decodes, for each scale in the multi-scale decoding and in a case that the scale is a first scale in the multi-scale decoding, the image feature of a last scale obtained by encoding with reference to the image feature of the scale, to obtain a decoding feature of the scale. The computer device decodes, in a case that the scale is not the first scale or the last scale in the multi-scale decoding, a decoding feature of a previous scale of the scale with reference to the image feature of the scale, to obtain a decoding feature of the scale. The computer device decodes, in a case that the scale is the last scale, a decoding feature of a previous scale of the last scale with reference to the image feature of the scale, to obtain the colored image.

In this embodiment, for a multi-scale decoding process, during decoding of each scale, an image feature of the corresponding scale is used as a reference for decoding of the scale, so that an encoding feature can be used as a reference for decoding a decoding feature, thereby effectively avoiding a decoding error, and improving decoding accuracy. In addition, during decoding of different scales, a feature of decoding of each scale is a feature obtained by decoding of a previous scale, so that the decoding feature can be progressively decoded, to progressively reconstruct texture details and color information of an image, and accurately reconstruct a colored image having a sketch texture and a color.

In one embodiment, the method further includes:

obtaining a sample sketch image, and extracting sample sketch texture features of multiple scales from the sample sketch image; obtaining a sample noise image, and extracting sample noise features of the multiple scales from the sample noise image; determining sample color guide information corresponding to the sample sketch image; encoding, for each scale among the multiple scales, the sample noise feature of the scale with reference to the sample sketch texture feature of the scale and the sample color guide information, to obtain sample image features of the multiple scales; and performing multi-scale decoding on the sample image features of the multiple scales, to obtain a predicted colored image, obtaining a label colored image corresponding to the sample sketch image, and training an initial image processing model based on the predicted colored image and the label colored image, to obtain an image processing model, where the label colored image has a sketch texture of the sample sketch image and has a color indicated by the sample color guide information.

In this embodiment, a sample sketch image is obtained, and sample sketch texture features of multiple scales are extracted from the sample sketch image. The multiple scales include a large scale and a small scale. The sample sketch texture feature of the large scale includes more low-level semantic features. The sample sketch texture feature of the small scale includes more high-level semantic features. Sample noise features of the multiple scales extracted from a sample noise image are obtained, so that feature extraction of multiple identical scales is performed on the sketch image and the preset noise image, and the sample sketch texture features of the multiple scales and sample color guide information corresponding to the sample sketch image are used as guide information for encoding the sample noise features. For each scale among the multiple scales, the sample noise feature of the scale is encoded with reference to the sample sketch texture feature of the scale and the sample color guide information, thereby generating, by encoding, a sample image feature in which the sample sketch texture feature and a color indicated by the sample color guide information are combined. In addition, combination of the sample sketch texture and the color contributes to that a color change in a subsequently generated image conforms to a direction of the sketch texture.

The encoding is multi-scale, and can obtain a sample image feature in which sample sketch texture features of different scales and an indicated color are combined, to perform multi-scale decoding on sample image features of multiple scales, to obtain a predicted colored image. A label colored image corresponding to the sample sketch image is obtained, and the initial image processing model is trained based on a difference between the predicted colored image and the label colored image, to adjust a model parameter, so that the predicted colored image generated by the image processing model obtained by training has a sketch texture of the sample sketch image and has a color indicated by the sample color guide information. In addition, the image processing model obtained by training can generate a colored image with a clearer sketch texture and finer edge transition details, and matching between a color in the colored image and the sketch texture is more harmonious, thereby improving image quality of the colored image.

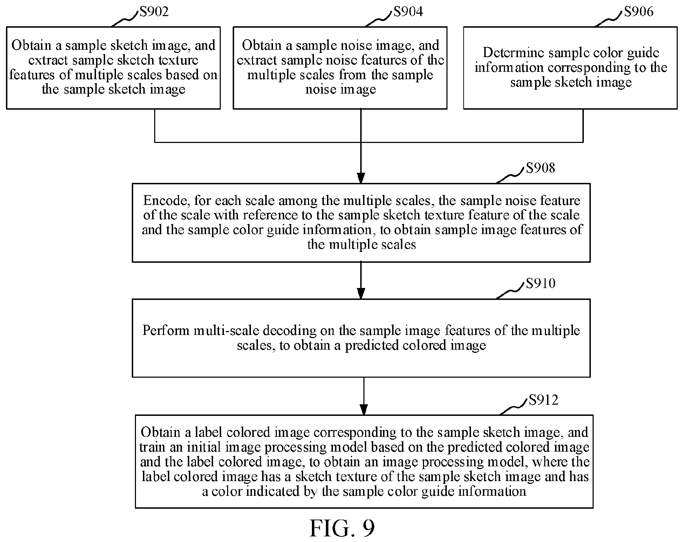

This application further provides a method for training an image processing model. As shown in FIG. 9, an example in which the method is applied to a computer device (the computer device may be the terminal or the server in FIG. 1) in FIG. 1 is used for description. The method includes the following operations.

Operation S902: obtain a sample sketch image, and extract sample multi-scale texture features from the sample sketch image; in embodiments of the present application, operation S902 can also include following operations: obtain a sample sketch image, and extract sample sketch texture features of multiple scales (namely, sample multi-scale texture features) from the sample sketch image.

The sample sketch image is an image that is formed by lines and is not colored. The sample sketch texture features refer to features capable of representing a texture structure in the sample sketch image.

In this embodiment, the computer device obtains a sample sketch image to be colored, and performs feature extraction on the sample sketch image, to obtain sample sketch texture features of multiple scales.

In this embodiment, an initial image processing model performs feature extraction on the sample sketch image, to obtain the sample sketch texture features of the multiple scales.

Operation S904: obtain a sample noise image, and extract sample multi-scale noise features from the sample noise image; in embodiments of the present application, operation S904 can also include following operations: Obtain a sample noise image, and extract sample noise features of the multiple scales (namely, sample multi-scale noise features) from the sample noise image.

The sample noise image is a preset pure noise image, for example, may be a noise image formed by a Gaussian noise, but is not limited thereto.

In this embodiment, the computer device obtains a sample noise image, and performs feature extraction on the sample noise image, to obtain corresponding sample noise features. Further, the sample noise features of the multiple scales may be obtained by feature extraction.

In this embodiment, the sample noise image is a noise image pre-stored in the initial image processing model. Feature extraction is performed on the sample noise image by using the image processing model, to obtain the sample noise features of the multiple scales. Further, a scale quantity corresponding to the sample sketch texture features of the multiple scales is the same as a scale quantity corresponding to the sample noise features of the multiple scales. For example, both the scale quantities are 5.

In one embodiment, the computer device obtains sample noise features extracted from the sample noise image, and encodes, for each scale among the multiple scales, the sample noise feature at the scale with reference to the sample sketch texture feature of the scale and the sample color guide information, to obtain sample image features of the multiple scales.

Further, the obtaining sample noise features extracted from the sample noise image includes: obtaining the sample noise features of the multiple scales extracted from the sample noise image.

The encoding, for each scale among the multiple scales, the sample noise feature at the scale with reference to the sample sketch texture feature of the scale and the sample color guide information, to obtain sample image features of the multiple scales includes: encoding, for each scale among the multiple scales, the sample noise feature of the scale with reference to the sample sketch texture feature of the scale and the sample color guide information, to obtain sample image features of the multiple scales.

Operation S906: Determine sample color information indicating coloring of the sample sketch image; in embodiments of the present application, Operation S906 can also include following operations: determine sample color guide information corresponding to the sample sketch image.

The sample color guide information is information for guiding coloring of the sample sketch image. The sample color guide information is configured for defining a color of the sample sketch image, and may be specifically color information customized by a user for the sample sketch image. The color information customized by the user for the sample sketch image may be a color customized for at least one region in the sample sketch image. The color information customized by the user for the sample sketch image may be represented by a sample custom palette image formed by custom color filling, or may be represented by a sample color description text for the sample sketch image.

In this embodiment, the computer device obtains the sample color guide information customized by the user for the sample sketch image, or randomly obtains one sample color random seed from a plurality of preset sample color random seeds as the sample color guide information. The sample color random seed may include one or more colors. Colors corresponding to different contents in the image may be set in the sample color random seed. For example, plants correspond to green, and sky and sea water correspond to blue. However, this is not limited thereto.

In this embodiment, the computer device may obtain a sample color description text as the sample color guide information. The sample color description text is configured for describing a color of the sketch image, and may be specifically describing a color of at least a part of content in the sample sketch image.

In this embodiment, the computer device may obtain a sample custom palette image corresponding to the sample sketch image as the sample color guide information. The sample custom palette image is an image obtained by the user by customizing the color of the sample sketch image.

Operation S908: Encode, for each scale in the multi-scale, a sample noise feature with a scale of the multi-scale noise features according to the sample texture feature with the scale of the multi-scale noise features and the sample color information, to obtain sample multi-scale image features; in embodiments of the present application, operation S908 can also include following operations: Encode, for each scale among the multiple scales, the sample noise feature of the scale with reference to the sample sketch texture feature of the scale and the sample color guide information, to obtain sample image features of the multiple scales (namely, sample multi-scale image features).

The sample image feature is a feature formed by combining the sample sketch texture feature and a color indicated by the sample color guide information. The sample image feature of each scale among the sample image features of the multiple scales is combined with the sample image feature of a previous scale.

In this embodiment, the computer device determines the color indicated by the sample color guide information. The computer device encodes, for each scale among the multiple scales, the sample noise feature of the scale with reference to the sample sketch texture feature of the scale and the color indicated by the sample color guide information, to obtain sample image features of the multiple scales.

In this embodiment, the sample color guide information includes a sample custom palette image, and the sample custom palette image is configured for customizing a color of the sample sketch image. The encoding, for each scale among the multiple scales, the sample noise feature of the scale with reference to the sample sketch texture feature of the scale and the sample color guide information, to obtain sample image features of the multiple scales includes:

performing feature extraction on the sample custom palette image, to obtain a sample palette feature corresponding to the sample custom palette image; and

encoding, for each scale among the multiple scales, the sample noise feature of the scale with reference to the sample sketch texture feature of the scale and the sample palette feature, to obtain the sample image features of the multiple scales.

In this embodiment, the sample custom palette image corresponds to sample palette features of at least two different scales. A scale quantity corresponding to the sample palette features of different scales is less than a scale quantity corresponding to the sample sketch texture features of multiple scales. A scale quantity corresponding to the sample sketch texture features of the multiple scales is the same as a scale quantity corresponding to the sample noise features of the multiple scales.

The encoding, for each scale among the multiple scales, the sample noise feature of the scale with reference to the sample sketch texture feature of the scale and the sample palette feature, to obtain the sample image features of the multiple scales includes:

encoding, for each scale among the multiple scales and in the presence of a sample palette feature of the scale, the sample noise feature of the scale with reference to the sample sketch texture feature of the scale and the sample palette feature, to obtain the sample image feature of the scale; and

encoding, in the absence of the sample palette feature of the scale, the sample noise feature of the scale with reference to the sample sketch texture feature of the scale, to obtain the sample image feature of the scale.

In some other embodiments, the sample custom palette image includes a sample grid patch image corresponding to the sample sketch image. The method further includes:
obtaining a sample palette template divided according to sample grid patches, and performing grid division on the sample sketch image according to the grid patches divided by the sample palette template, to obtain sample grid regions in the sample sketch image, where the sample grid patches in the sample sketch image are in a one-to-one correspondence with the sample grid regions in the sample sketch image; and obtaining a sample grid patch image corresponding to the sample palette template, where the sample grid patch image is obtained by performing custom color filling on each sample grid patch in the sample palette template, and each sample grid patch is configured for defining a color of the corresponding sample grid region in the sample sketch image.

The label colored image has the sketch texture of the sample sketch image, and the grid regions in the label colored image have colors filled by the corresponding sample grid patches in the sample grid patch image.

In this embodiment, the sample custom palette image includes a sample layer patch image corresponding to the sample sketch image. The method further includes:
performing random color filling on the sample sketch image to obtain a sample color image; and performing layer patch segmentation on the sample color image according to sample image regions in the sample color image, to obtain the sample layer patch image corresponding to the sample sketch image. The colored image has the sketch texture of the sketch image, and the image regions in the colored image have colors indicated by the corresponding layer patches in the layer patch image.

In this embodiment, the performing layer patch segmentation on the sample color image according to sample image regions in the sample color image, to obtain the sample layer patch image corresponding to the sample sketch image includes: performing layer patch segmentation on the sample color image according to the sample image regions in the sample color image, to obtain an initial sample layer patch image corresponding to the sample sketch image, where the initial sample layer patch image includes sample layer patches corresponding to the sample image regions in the sample sketch image; and obtaining the sample layer patch image based on custom color adjustment on at least one of the sample layer patches in the initial sample layer patch image.

The label colored image has the sketch texture of the sample sketch image, and the image regions in the label colored image have colors indicated by the corresponding sample layer patches in the sample layer patch image.

Operation S910: Perform multi-scale decoding on the sample image features of the multiple scales, to obtain a predicted colored image.

In this embodiment, the computer device performs multi-scale decoding on the sample image features of the multiple scales, and obtains a predicted colored image after decoding of the last scale is completed. The predicted colored image may have a sketch texture of the sample sketch image and may have a color indicated by the sample color guide information.

In this embodiment, for each scale in the multi-scale decoding, a sample decoding feature of a previous scale of the scale is decoded with reference to the sample image feature of the scale, to obtain a sample decoding feature of the scale. Decoding of a next scale is performed. The obtained sample decoding feature of the scale is used as a sample decoding feature of a previous scale in the decoding of the next scale, the operation of decoding a sample decoding feature of a previous scale of the scale is returned and continuously performed, until a predicted colored image is obtained after decoding of the last scale is completed.

In this embodiment, an encoding order of the multiple scales during encoding is opposite to a decoding order of the multiple scales during decoding.

In this embodiment, the performing multi-scale decoding on the sample image features of the multiple scales, to obtain a predicted colored image includes:

decoding, for each scale in the multi-scale decoding and in a case that the scale is a first scale in the multi-scale decoding, the sample image feature of a last scale obtained by encoding with reference to the sample image feature of the scale, to obtain a sample decoding feature of the scale;

decoding, in a case that the scale is not the first scale or the last scale in the multi-scale decoding, a sample decoding feature of a previous scale of the scale with reference to the sample image feature of the scale, to obtain a sample decoding feature of the scale; and

decoding, in a case that the scale is the last scale, a sample decoding feature of a previous scale of the last scale with reference to the sample image feature of the scale, to obtain the predicted colored image.

Operation S912: Obtain a label colored image corresponding to the sample sketch image, and train an initial image processing model based on the predicted colored image and the label colored image, to obtain an image processing model, where the label colored image has a sketch texture of the sample sketch image and has a color indicated by the sample color guide information (namely, sample color information).

The label colored image is a label in model training. The label colored image has a sketch texture of the sample sketch image and has a color indicated by the sample color guide information.

In this embodiment, the training an initial image processing model based on the predicted colored image and the label colored image, to obtain an image processing model includes:

determining at least one of a texture loss and a color loss between the predicted colored image and the label colored image, and training the initial image processing model based on at least one of the texture loss and the color loss, to obtain the image processing model.

In other embodiments, the label colored image may be a predicted colored image outputted in an iteration previous to a current iteration.

In this embodiment, a sample sketch image is obtained, and sample sketch texture features of multiple scales are extracted from the sample sketch image. The multiple scales include a large scale and a small scale. The sample sketch texture feature of the large scale includes more low-level semantic features. The sample sketch texture feature of the small scale includes more high-level semantic features. Sample noise features of the multiple scales extracted from a sample noise image are obtained, so that feature extraction of multiple identical scales is performed on the sketch image and the preset noise image, and the sample sketch texture features of the multiple scales and sample color guide information corresponding to the sample sketch image are used as guide information for encoding the sample noise features. For each scale among the multiple scales, the sample noise feature of the scale is encoded with reference to the sample sketch texture feature of the scale and the sample color guide information, thereby generating, by encoding, a sample image feature in which the sample sketch texture feature and a color indicated by the sample color guide information are combined. In addition, combination of the sample sketch texture and the color contributes to that a color change in a subsequently generated image conforms to a direction of the sketch texture.

The encoding is multi-scale, and can obtain a sample image feature in which sample sketch texture features of different scales and an indicated color are combined, to perform multi-scale decoding on sample image features of multiple scales, to obtain a predicted colored image. A label colored image corresponding to the sample sketch image is obtained, and the initial image processing model is trained based on a difference between the predicted colored image and the label colored image, to adjust a model parameter, so that the predicted colored image generated by the image processing model obtained by training has a sketch texture of the sample sketch image and has a color indicated by the sample color guide information. In addition, the image processing model obtained by training can generate a colored image with a clearer sketch texture and finer edge transition details, and matching between a color in the colored image and the sketch texture is more harmonious, thereby improving image quality of the colored image.

In one embodiment, the method further includes:

obtaining a sample image description text for the sample sketch image, where the sample image description text is configured for describing a feature of the sample sketch image; and extracting a sample image description feature from the sample image description text.

The encoding, for each scale among the multiple scales, the sample noise feature of the scale with reference to the sample sketch texture feature of the scale and the sample color guide information, to obtain sample image features of the multiple scales includes:

encoding, for each scale among the multiple scales, the sample noise feature of the scale with reference to the sample sketch texture feature of the scale, the sample color guide information, and the sample image description feature, to obtain sample image features of the multiple scales.

In one embodiment, the training an initial image processing model based on the predicted colored image and the label colored image, to obtain an image processing model includes:

determining a texture loss between a sketch texture of the predicted colored image and the sketch texture of the label colored image; determining a color loss between a color of the predicted colored image and a color of the label colored image; and training the initial image processing model according to the texture loss and the color loss, to obtain the image processing model.

In this embodiment, the computer device may calculate a texture loss between a sketch texture of the predicted colored image and the sketch texture of the label colored image. The computer device may calculate a color loss between a color of the predicted colored image and a color of the label colored image. A target loss is calculated according to the texture loss and the color loss, a parameter of the initial image processing model is adjusted based on the target loss, and training is continued and will be stopped until a training stop condition is satisfied, to obtain the image processing model.

In this embodiment, the training the initial image processing model according to the texture loss and the color loss, to obtain the image processing model includes:

obtaining a target loss function, and calculating a target loss according to the target loss function, the texture loss, and the color loss; and training the initial image processing model based on the target loss, to obtain the image processing model.

In this embodiment, the texture loss and the color loss between the predicted colored image and the label colored image that are generated by the model are considered, to adjust a model parameter for generating the sketch texture and a model parameter for generating the color, so as to gradually reduce the texture loss and the color loss during training, thereby obtaining the image processing model that can accurately generate the sketch texture and the color.

In one embodiment, iterative training is performed on the initial image processing model repeatedly based on the predicted colored image, to obtain a predicted colored image corresponding to each iteration. When an image difference between the predicted colored image obtained in a current iteration and the predicted colored image obtained in a previous iteration of the current iteration satisfies an iteration stop condition, the image processing model is obtained.

In one embodiment, the initial image processing model includes an initial sketch control unit. The initial sketch control unit is configured to extract sample sketch texture features of the multiple scales. The training an initial image processing model based on the predicted colored image and the label colored image, to obtain an image processing model includes:

determining a texture loss between a sketch texture of the predicted colored image and the sketch texture of the label colored image; and training the initial sketch control unit of the initial image processing model based on the texture loss, to obtain an image processing model including a sketch control unit.

The texture loss represents a difference between the sketch texture of the predicted colored image and the sketch texture of the label colored image, namely a difference between sketch textures of the colored image generated by the model and a real colored image.

In this embodiment, the initial image processing model includes an initial sketch control unit. The computer device inputs a sample sketch image into the initial image processing model, and extracts sample sketch texture features of multiple scales from the sample sketch image by using the initial sketch control unit.

The computer device obtains a sample noise image, and extracts sample noise features of the multiple scales from the sample noise image by using the initial image processing model. In other embodiments, the sample noise image may be stored in the initial image processing model.

Sample color guide information corresponding to the sample sketch image is obtained and inputted into the initial image processing model. The initial image processing model encodes, for each scale among the multiple scales, the sample noise feature of the scale with reference to the sample sketch texture feature of the scale and the sample color guide information, to obtain sample image features of the multiple scales. The initial image processing model performs multi-scale decoding on the sample image features of the multiple scales, to obtain a predicted colored image generated by the initial image processing model.

The computer device calculates a texture loss between the sketch texture of the predicted colored image and the sketch texture of the label colored image, adjusts a parameter of the initial sketch control unit based on the texture loss, continues to perform training, and stops training until a training stop condition is satisfied, to obtain the image processing model including the sketch control unit.

In this embodiment, the initial image processing model includes an initial sketch control unit and an initial image generation unit. The computer device inputs the sample sketch image to the initial sketch control unit, inputs the sample color guide information and the sample noise image to the initial image generation unit, and extracts sample sketch texture features of multiple scales based on the sample sketch image by using the initial sketch control unit.

The initial image generation unit obtains sample noise features of the multiple scales extracted from the sample noise image, and the sample sketch texture features of the multiple scales are inputted to the initial image generation unit.

The initial image generation unit encodes, for each scale among the multiple scales, the sample noise feature of the scale with reference to the sample sketch texture feature of the scale and the sample color guide information, to obtain sample image features of the multiple scales. The initial image generation unit performs multi-scale decoding on the sample image features of the multiple scales, to obtain a predicted colored image. The initial sketch control unit and the initial image generation unit are trained based on the texture loss, to obtain the image processing model including a sketch control unit and an image generation unit.

Further, the initial image generation unit includes an encoder and a decoder. The encoder performs encoding, to obtain sample image features of multiple scales. The decoder performs multi-scale decoding, to obtain a predicted colored image.

In this embodiment, the initial image processing model includes an initial sketch control unit, so that the initial sketch control unit is configured to extract sample sketch texture features of multiple scales. The initial sketch control unit of the initial image processing model is trained based on a texture loss, so as to independently train a unit for controlling sketch texture generation, and gradually reduce, during training, a texture difference between a predicted colored image and a label image that are outputted by the model, thereby improving accuracy of generating the sketch texture by the sketch control unit, and making the sketch texture of the obtained colored image more accurate.

In one embodiment, the initial image processing model includes an initial sketch control unit and an initial color control unit. The initial sketch control unit is configured to extract the sample sketch texture features of the multiple scales. The sample color guide information includes a sample palette image for customizing a color of the sample sketch image.

The encoding, for each scale among the multiple scales, the sample noise feature of the scale with reference to the sample sketch texture feature of the scale and the sample color guide information, to obtain sample image features of the multiple scales includes: extracting a sample palette feature of the sample palette image by using the initial color control unit; and encoding, for each scale among the multiple scales, the sample noise feature of the scale with reference to the sample sketch texture feature of the scale and the sample palette feature, to obtain the sample image features of the multiple scales.

The training the initial image processing model according to the texture loss and the color loss, to obtain the image processing model includes:

training the initial sketch control unit based on the texture loss, and training the initial color control unit based on the color loss, to obtain the image processing model including a sketch control unit and a color control unit.

In this embodiment, the initial image processing model includes an initial sketch control unit and an initial color control unit. The computer device extracts sample sketch texture features of multiple scales from the sample sketch image by using the initial sketch control unit, and extracts a sample palette feature of the sample palette image by using the initial color control unit.

For each scale among the multiple scales, the sample noise feature of the scale is encoded with reference to the sample sketch texture feature of the scale extracted by using the initial sketch control unit and the sample palette feature extracted by using the initial color control unit, to obtain sample image features of the multiple scales.

The initial sketch control unit is trained based on the texture loss, and a sketch control unit is obtained by training. Moreover, the initial color control unit is trained based on the color loss, and a color control unit is obtained by training, thereby obtaining the image processing model including the sketch control unit and the color control unit.

In this embodiment, the initial image processing model includes an initial sketch control unit and an initial color control unit. The initial sketch control unit is trained based on a texture loss, and the initial color control unit is trained based on a color loss, so that training of the two units is independent of each other. The initial sketch control unit is trained based on the texture loss, to gradually reduce, during training, a texture difference between a predicted colored image and a label image that are outputted by the model, thereby improving accuracy of generating the sketch texture by the sketch control unit, and making the sketch texture of the obtained colored image more accurate. The initial color control unit is trained based on the color loss between the predicted colored image and the label colored image, to gradually reduce, during training, a color difference between the predicted colored image and the label image that are outputted by the model, and improve accuracy of coloring, by the color control unit, the sketch image.

In this embodiment, a training order of the initial sketch control unit and the initial color control unit is not limited. The initial sketch control unit and the initial color control unit may be trained at the same time. Alternatively, the initial sketch control unit may be trained first, and then the initial color control unit is trained after the sketch control unit is obtained. Alternatively, the initial color control unit may be trained first, and then the initial sketch control unit is trained after the color control unit is obtained.

In this embodiment, the initial image processing model includes an initial sketch control unit and an initial color control unit. The computer device trains the initial sketch control unit based on the texture loss, to obtain a trained sketch control unit. After the sketch control unit is obtained, sample sketch texture features of multiple scales are extracted from the sample sketch image by using the sketch control unit, and a sample palette feature of the sample palette image is extracted by using the initial color control unit. For each scale among the multiple scales, the sample noise feature of the scale is encoded with reference to the sample sketch texture feature of the scale and the sample palette feature extracted by using the initial color control unit, to obtain sample image features of the multiple scales. Multi-scale decoding is performed on the sample image features of the multiple scales, to obtain a predicted colored image. A color loss between the predicted colored image and a label colored image is determined, and the initial color control unit is trained based on the texture loss, to obtain an image processing model including a sketch control unit and a color control unit.

In this embodiment, the initial sketch control unit is trained based on the texture loss, to obtain the sketch control unit. Therefore, the initial color control unit is trained after the sketch control unit is obtained by training, so that training of the two units is independent of each other. The sketch control unit extracts sample sketch texture features of multiple scales, encodes, for each scale among the multiple scales, a sample noise feature of the scale with reference to the sample sketch texture feature of the scale and a sample palette feature, to obtain sample image features of the multiple scales, performs multi-scale decoding on the sample image features of the multiple scales, to obtain a predicted colored image, determines a color loss between the predicted colored image and a label colored image, and trains the initial color control unit based on the color loss, to obtain an image processing model including a sketch control unit and a color control unit, so that the trained sketch control unit and color control unit are independent of each other. Therefore, in an application scenario of the image processing model, the sketch control unit may be separately invoked to accurately generate a colored image having a sketch texture and a random color. The color control unit may accurately generate the colored image having the sketch texture and a custom color with reference to user-defined color information, so that the image processing model can adapt to different use scenarios.

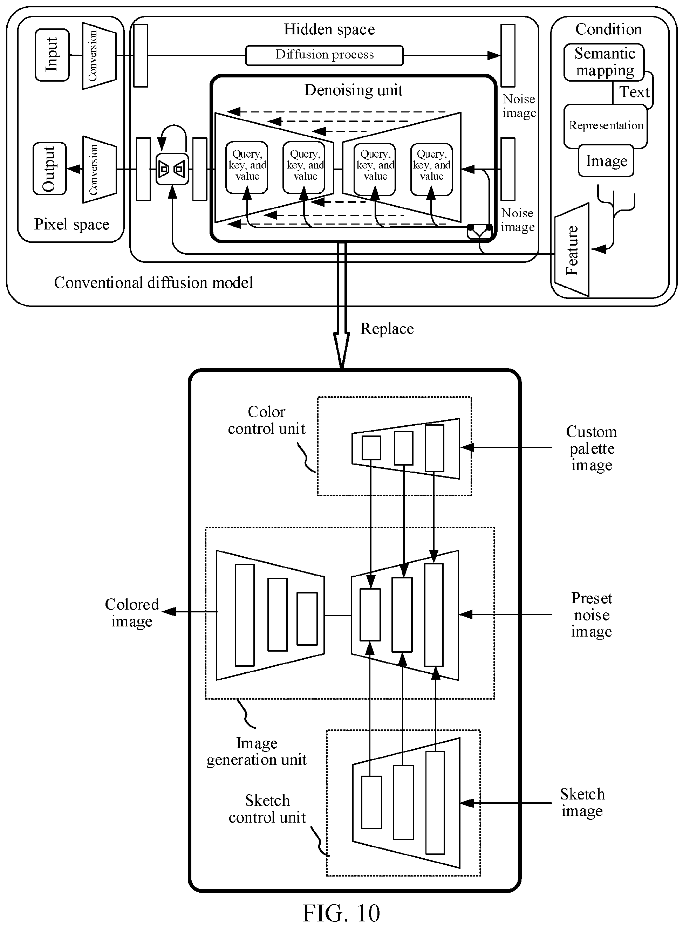

In one embodiment, the initial image processing model used in a training process is obtained based on improving a conventional diffusion model stable diffusion. FIG. 10 shows a difference between a conventional diffusion model and an initial image processing model. An upper half in FIG. 10 is divided into an architecture of the conventional diffusion model during training, and a lower half is divided into a main architecture of the initial image processing model. A denoising unit in the upper half is replaced with a lower half part, so that the initial image processing model may be obtained. To be specific, the initial image processing model adds two branches, namely a sketch control unit and a color control unit, to the diffusion model. A structure of the two branches is similar to that of an encoder in the denoising unit U-Net, but values of parameter quantities are different. The parameter quantity of the sketch control branch is approximately 400 M, and the parameter quantity of the color control branch is approximately 40 M, so that the two branches are of asymmetrical designs. This mainly considers semantic information of different levels of color and texture structure data. As a high-level sketch texture, a deeper-level network structure is needed for identification and understanding. As low-level color guide information, only a lightweight network is needed. Time embedding (time sequence feature) may be further considered for the color guide information. An image description text (text prompt) may be further considered for texture information of the sketch image. To be specific, the initial image processing model is inputted into the sketch control unit as an additional condition.

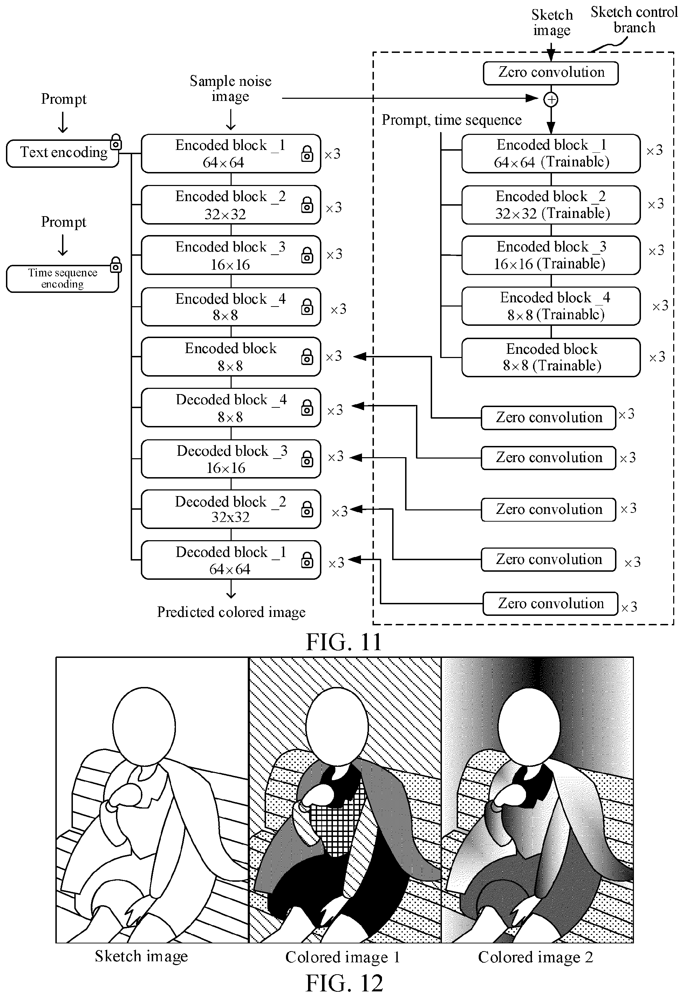

The sketch control branch is the sketch control unit, referring to a network structure of controlnet. As shown in FIG. 11, the network structure on the left is a pre-trained part of the diffusion model, for providing a stable image generation result. A weight of this part does not need to be updated. The network structure on the right is the sketch control branch controlnet, for further adding formulated sketch texture information based on a pre-trained network, to guide the network to generate an image with a specific sketch texture.

To train the sketch control branch, a large quantity of high-quality open source image data is collected. Then a sketch image corresponding to image data is extracted by using a sketch extraction model anime2sketch as an input of the sketch control branch, thereby constructing paired data for supervised training. To make training of the sketch model more robust, data augmentation needs to be performed on a sketch output result of the Anime2Sketch model, so that in a training process, the model truly learns sketch information rather than other irrelevant factors. The irrelevant factors are, for example, image noise and image orientation information.

A first operation of data augmentation is image quantization, namely normalization, and is implemented by using a zero convolution network. A function of quantization is to convert a continuous value into a discrete value, and discard redundant information, especially to avoid that some grayscale information of an original image is included in a sketch input. The network may reconstruct the original image by using the grayscale information. In this way, what the network learns is not real sketch generation. Therefore, it is very necessary to perform quantization on the sketch input. I is set to an original sketch image, namely a sketch image before quantization, and a pixel value range thereof is 0 to 1. A quantization operation maps each continuous pixel value to a discrete value. Q is set to a spacing number for quantization, and a quantized sample sketch image $I_q$ may be represented as:

$$I_q(x, y) = floor(I(x, y) * Q)/Q$$

where floor is a round-down function, and (x, y) is a coordinate of a pixel that is being quantized. A pixel value in $I_q$ has only Q possible discrete values instead of continuous values from 0 to 1. It is set by default that Q=8.

Other data augmentation operations include common operations such as flipping an image up and down, flipping left and right, and adding random white noise.

When the sketch branch is trained, the color branch does not exist. Training parameters include: batch size of 64, a learning rate of $1\times10^{-5}$, a training operation quantity of 5000, and an optimizer Adam. An objective function for training is an image reconstruction loss function $L_{DM}$:

$$L_{DM} = \mathrm{E}_{x,\varepsilon\sim\mathrm{N}(0,1),t}\left[\left\|\varepsilon - \varepsilon_\theta(x_t, t)\right\|_2^2\right]$$

where x is a label colored image, $\varepsilon$ is a predicted colored image, which represents an intermediate result of image generation, $\varepsilon_\theta$ is a predicted colored image when a model parameter is $\theta$ in a $t^{th}$ iteration, and is also an intermediate result of image generation, $\theta$ is the model parameter, N(0, 1) represents Gaussian distribution in which a mean is 0 and variance is 1, and $t \in \{1,2,\cdots T\}$ represents a sampling operation quantity.

The color control branch has two types of inputs, namely a rectangular patch input and a SAM layer patch input. To train the network of the color control branch, training data of corresponding rectangular patches and SAM layer patches needs to be constructed.

The rectangular patches are obtained:

It is assumed that an original sketch image X is a two-dimensional matrix having a size of $H \times W$. X is downsampled d times by using bicubic interpolation:

$$X_{resized} = bicubic\_resize(X,(W/\mathrm{d}),(H/\mathrm{d}))$$

where bicubic_resize is a function for performing bicubic interpolation on a rectangular patch image to be adjusted to a specified size. Then, the size-adjusted rectangular patch image is upsampled into an image of $H \times W$ by using nearest neighbor interpolation:

$$color = nearest\_neighbor\_resize(X_{resize},W,H)$$

where nearest_neighbor_resize is a function for performing nearest neighbor interpolation on the size-adjusted rectangular patch image, to be adjusted to a specified size. It is set by default that d=32, and upsampling and downsampling functions may directly invoke a pillow function library.

At an inference stage, the rectangular patch image is initialized to be blank. A user needs to self-fill colors of rectangular patches in the rectangular patch image, and then inputs the rectangular patch image into a network, to obtain a colored image of a custom color. The inference stage is a model application stage.

The SAM layer patches are obtained:

The layer patches are divided according to a result of image division. Each patch has a same color inside by default. A segmentation model uses segment anything (SAM). To obtain a full-image segmentation result, a prompt needs to be inputted to the SAM model. The prompt herein refers to evenly distributed grid points, and the model automatically filters out a low-quality or repetitive segmentation layer. For a layer patch segmentation result, refer to FIG. 7 and FIG. 8.

During training, an original color value of an image in the segmentation layer may be obtained by using the layer. However, during model application, the user can only modify the entire layer to develop a color. Therefore, colors in the layer are consistent. To reduce the difference between training and application, training data needs to be preprocessed. To be specific, local averaging is performed according to the layer segmentation result.

It is assumed that the image is segmented to obtain layer information: $m_{i,j} \in \{0,1,\cdots, N\}$, where N represents the number of layers. A pixel value $m_{i,j}$ within the layer is locally averaged, which may be expressed as:

$$\overline{M}_i = \frac{1}{A}\sum_{j=1}^{A} m_{ij}$$

After layer pixel preprocessing is performed, layer patches obtained in the training stage are consistent with layer patches inputted by the user in the inference stage, thereby ensuring stability of a model output result.

After the training data of the corresponding rectangular patches and SAM layer patches is constructed, the color branch network may be trained. The network structure of the color branch uses a network that is more lightweight than controlnet. The main reason is that the color information is easier to understand than the network information, and excessively complex parameters are not needed. Referring to FIG. 4, an input of a color control network is adding a time sequence feature (time embedding) and the downsampled custom palette image (namely, the rectangular patch image or the SAM layer patch image). The downsampling is usually implemented by using a pixel shuffle operation, and a basic principle of the operation is to change spatial pixel distribution to a channel direction. It is assumed that an original image size of the custom palette image is (1, 3, 512, 512), and a downsampled palette image is (1, 129, 64, 64). The palette feature of each dimension obtained by the color control branch is added with a vector of the corresponding dimension in the image generation unit, to control and guide a generation result.

For training of the color control branch network, a weight of the sketch control branch needs to be fixed, and then joint training is performed.

Training parameters of the color control branch include: batch size of 64, a learning rate of $1\times10^{-5}$, a training

operation quantity of 5000, and an optimizer Adam. An objective function for training is also the foregoing image reconstruction loss function.

In the image processing model obtained by training in this embodiment, the sketch control branch, the rectangular patches, and the SAM layer patches may be used alone or in combination. For example, the sketch control branch may be used alone, and a random automatic coloring effect may be generated. By using the sketch control branch and the rectangular patches, custom color control may be implemented by editing a color of a rectangular box. By using the sketch control branch and the SAM layer patches, color control of a corresponding image region may be implemented by specifically modifying a color of a layer patch.

The sketch extraction model is not limited to an anime2sketch method, and other edge extraction models such as canny and pidinet are also applicable. The layer segmentation method is not limited to the SAM model, and another stability image segmentation method may alternatively be used.

In one embodiment, an image processing method is provided, which is applied to a computer device. The method includes:

obtaining a sketch image, and extracting sketch texture features of multiple scales from the sketch image;

and obtaining a preset noise image, and extracting noise features of the multiple scales from the preset noise image.

Further, a custom palette image corresponding to the sketch image is obtained, and palette features of at least two different scales are extracted from the custom palette image.

Further, for each scale among the multiple scales and in the presence of a palette feature of the scale, the noise feature of the scale is encoded with reference to the sketch texture feature of the scale and the palette feature, to obtain an image feature of the scale.

Next, in the absence of the palette feature of the scale, the noise feature of the scale is encoded with reference to the sketch texture feature of the scale, to obtain the image feature of the scale.

Further, for each scale in the multi-scale decoding and in a case that the scale is a first scale in the multi-scale decoding, the image feature of a last scale obtained by encoding is decoded with reference to the image feature of the scale, to obtain a decoding feature of the scale.

In some embodiments, in a case that the scale is not the first scale or the last scale in the multi-scale decoding, a decoding feature of a previous scale of the scale is decoded with reference to the image feature of the scale, to obtain a decoding feature of the scale.

Further, in a case that the scale is the last scale, a decoding feature of a previous scale of the last scale is decoded with reference to the image feature of the scale, to obtain a colored image. The colored image has a sketch texture of the sketch image and has a color indicated by the custom palette image.

In one embodiment, as shown in FIG. 12, FIG. 13, and FIG. 14, the image processing model has a capability of automatically coloring a sketch, has a good adaptation effect for different scenes such as scenery and characters, and has a good space color correspondence and hue consistency. If a color control unit is not invoked, a generated image color is random. If color control is added, a generated image may be laid out according to space patches.

As shown in FIG. 12, it indicates that there is no palette image as an input. To be specific, there is no color control, and only the sketch image can be inputted to generate a high-quality colored image, but a color is random.

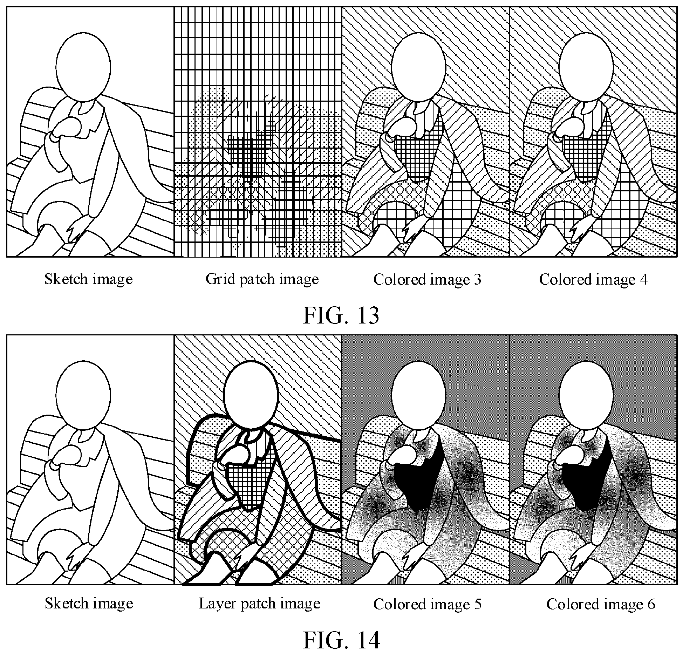

As shown in FIG. 13, a rectangular patch image, namely a grid patch image is added. A custom color image can be stably generated, and a result is not affected by a random seed.

As shown in FIG. 14, a SAM patch image, namely a layer patch image is added, and a custom color image can also be stably generated.

There is a color difference between generation results of rectangular patches and SAM patches. This is caused because color values of the two inputs are not completely the same.

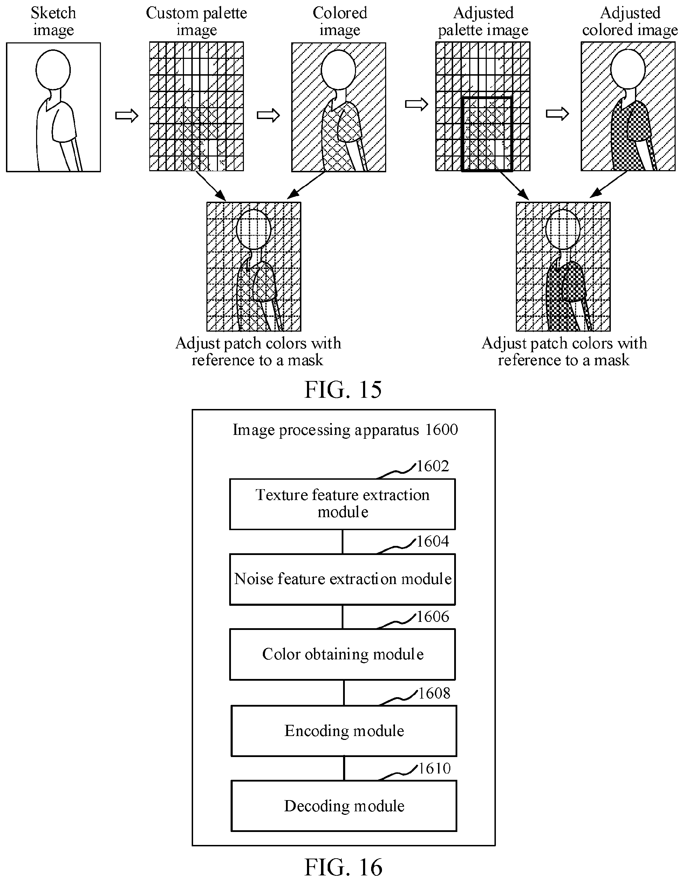

In one embodiment, as shown in FIG. 15, an application scenario of an image processing method is provided. After a user uploads a sketch image, a custom palette image is obtained in any one of the following manners:
The user fills a mask with colors grid by grid. To be specific, grid patches are filled in a customization manner, to form a grid patch image.

Alternatively, the user selects a satisfactory layer patch image from an initial layer patch image recommended by a system, and may directly modify, if there is an unsatisfactory layer patch, a color of the layer patch, to form a layer patch image.

The grid patch image or the layer patch image may be used as the custom palette image. The custom palette image and the sketch image are inputted into an image processing model. The image processing model includes a sketch control unit, a color control unit, and an image generation unit. The image processing model stores a preset noise image.

The sketch image, the custom palette image, and the preset noise image are processed by using the image processing model, to generate a colored image corresponding to the sketch image.

After the image processing model generates the colored image, if the user is still unsatisfied with a color in the colored image, the user may continue to adjust the corresponding grid patch image or grid patch image, to generate a new colored image.

In this embodiment, a sketch input may be automatically colored, and the designed custom palette image can perform fine space control on a generated image, thereby ensuring consistency between a space element and color control. In addition, for the sketch control unit and the color control unit, network structures of different sizes are designed according to respective semantic attributes of a sketch texture structure and a color. It can be ensured that a high-quality colored image is generated not only when the user customizes a color, but also when no color is inputted, a high-quality colored image can be stably generated based on the sketch image.

Although the operations are displayed sequentially according to the instructions of the arrows in the flowcharts involved in the embodiments as described above, these operations are not necessarily performed sequentially according to the sequence instructed by the arrows. Unless otherwise explicitly specified in this application, execution of the operations is not strictly limited, and the operations may be performed in other sequences. Moreover, at least some of the operations in flowcharts in the above embodiment may include multiple sub-operations or multiple stages. The operations or stages are not necessarily performed at the same moment but may be performed in different moments. Execution of the operations or stages is not necessarily sequentially performed, but may be performed alternately with other operations or at least some operations or stages of other operations.

Based on the same inventive concept, an embodiment of this application further provides an image processing apparatus for implementing the foregoing image processing method. Implementation solutions provided by the apparatus for solving problems are similar to the implementation solutions described in the foregoing method. Therefore, for specific limitations in one or more image processing apparatus embodiments provided below, refer to the limitations on the image processing method in the foregoing descriptions. Details are not described herein again.

In one embodiment, as shown in FIG. 16, an image processing apparatus 1600 is provided, including: a texture feature extraction module 1602, a noise feature extraction module 1604, a color obtaining module 1606, an encoding module 1608, and a decoding module 1610.

The texture feature extraction module 1602 is configured to obtain a sketch image, and extract sketch texture features of multiple scales from the sketch image.

The noise feature extraction module 1604 is configured to obtain a preset noise image, and extract noise features of the multiple scales from the preset noise image.

The color obtaining module 1606 is configured to determine color guide information corresponding to the sketch image.

The encoding module 1608 is configured to encode, for each scale among the multiple scales, the noise feature of the scale with reference to the sketch texture feature of the scale and the color guide information, to obtain image features of the multiple scales.

The decoding module 1610 is configured to perform multi-scale decoding on the image features of the multiple scales, to obtain a colored image, where the colored image has a sketch texture of the sketch image and has a color indicated by the color guide information.

In this embodiment, a sketch image is obtained, and sketch texture features of multiple scales are extracted based on the sketch image. The extracted sketch texture feature of a large scale includes more low-level semantic features. The sketch texture feature of a small scale includes more high-level semantic features. Noise features of the multiple scales extracted from a preset noise image are obtained, so that feature extraction of multiple identical scales is performed on the sketch image and the preset noise image, and the sketch texture features of the multiple scales and color guide information corresponding to the sketch image are used as guide information for encoding the noise features. For each scale among the multiple scales, the noise feature of the scale is encoded with reference to the sketch texture feature of the scale and the color guide information, thereby generating, by encoding, an image feature in which the sketch texture feature and a color indicated by the color guide information are combined. In addition, the sketch texture and the color are combined, so that a color in a subsequently generated image can conform to a direction of the sketch texture. The encoding is multi-scale, and an image feature in which sketch texture features of different scales and the color are combined can be obtained, to perform multi-scale decoding on the image features of the multiple scales, so that different layers of texture are focused on in a decoding process, and a colored image with a clearer sketch texture and finer edge transition details can be generated. In addition, matching between a color in the colored image and the sketch texture is more harmonious, thereby improving image quality of the generated colored image.

In one embodiment, the color guide information includes a custom palette image, and the custom palette image is configured for customizing a color of the sketch image. The encoding module 1608 is further configured to: extract a palette feature of the custom palette image; and encode, for each scale among the multiple scales, the noise feature of the scale with reference to the sketch texture feature of the scale and the palette feature, to obtain the image features of the multiple scales.

In this embodiment, the custom palette image is a palette image in which a user defines a color of the sketch image. Feature extraction is performed on the user-defined palette image, to obtain a palette feature corresponding to the custom palette image. For each scale among the multiple scales, the noise feature of the scale is encoded with reference to the sketch texture feature of the scale and the palette feature. The noise feature can be encoded into an image feature in which the sketch texture feature and the palette feature are combined. Therefore, the sketch image and corresponding color information can be used as guide information, so that an image having a sketch texture expected by the user and a custom color is generated from the preset noise image. In addition, encoding for multiple scales is performed, and the obtained image features of the multiple scales can include sketch textures and shallow information and deep information of colors, so that an image texture generated by decoding is clearer and finer, and colors are more harmonious.

In one embodiment, the encoding module 1608 is further configured to: extract palette features of at least two different scales from the custom palette image, where a scale quantity corresponding to the at least two different scales is less than a scale quantity corresponding to the multiple scales; encode, for each scale among the multiple scales and in the presence of a palette feature of the scale, the noise feature of the scale with reference to the sketch texture feature of the scale and the palette feature, to obtain the image feature of the scale; and encode, in the absence of the palette feature of the scale, the noise feature of the scale with reference to the sketch texture feature of the scale, to obtain the image feature of the scale.

In this embodiment, colors and textures belong to semantics of different levels. The colors belong to low-level semantics, and the textures belong to high-level semantic information. Therefore, features of fewer scales are extracted for the colors, and features of more scales are extracted for the sketch texture of the sketch image. For each scale among the multiple scales, in the presence of a palette feature of the scale, the noise feature of the scale is encoded with reference to the sketch texture feature of the scale and the palette feature, so that the sketch texture feature and the palette feature can be used as guide information, to indicate that the sketch texture feature and the palette feature are combined during encoding based on the noise feature, thereby obtaining an image feature of the scale in which the sketch texture feature and the palette feature of the corresponding scale are combined. In the absence of the palette feature of the scale, the noise feature of the scale is encoded with reference to the sketch texture feature of the scale, to use the sketch texture feature as guide information, to indicate that the sketch texture feature is combined during encoding based on the noise feature, thereby obtaining an image feature of the scale in which the sketch texture feature of the corresponding scale is combined. The image feature in which the sketch textures and the colors of different levels are combined this time can be configured for performing image reconstruction more accurately, so that sketch textures in a colored image obtained by reconstruction is clearer and finer, and colors are more harmonious and natural, thereby improving image quality.

In one embodiment, the color obtaining module 1606 is further configured to: obtain a palette template divided according to grid patches, and perform grid division on the sketch image according to the grid patches divided by the palette template, to obtain grid regions in the sketch image, where the grid patches in the sketch image are in a one-to-one correspondence with the grid regions in the sketch image; and obtain a grid patch image corresponding to the palette template, where the grid patch image is obtained by performing custom color filling on each grid patch in the palette template, and the grid patch is configured for defining a color of the corresponding grid region in the sketch image. The colored image has the sketch texture of the sketch image, and the grid regions in the colored image have colors filled by the corresponding grid patches in the grid patch image.

In this embodiment, a palette template divided according to grid patches is obtained, and grid division is performed on the sketch image according to the grid patches divided by the palette template, to obtain grid regions representing image regions in the sketch image, so that the grid patches in the sketch image are in a one-to-one correspondence with the grid regions in the palette template, and a user can define a color of each image region in the sketch image by filling the grid patch with a color, thereby effectively implementing that the user defines the color of the sketch image. In addition, the user-defined color is subsequently used as guide information during feature encoding and decoding, so that a finally generated colored image not only has a sketch texture of the sketch image, but grid regions in the colored image further have colors filled by the user in the corresponding grid patches, thereby effectively generating a sketch image of a custom color.

In one embodiment, the color obtaining module 1606 is further configured to: perform random color filling on the sketch image to obtain a color image; and perform layer patch segmentation on the color image according to image regions in the color image, to obtain the layer patch image corresponding to the sketch image, where the layer patch image includes a layer patch corresponding to each image region. The colored image has the sketch texture of the sketch image, and the image regions in the colored image have colors indicated by the corresponding layer patches in the layer patch image.

In this embodiment, random color filling is performed on the sketch image, to obtain a color image, so that layer patch segmentation can be performed on the color image according to image regions in the color image, to accurately segment layer patches in the color image. The layer patches form a layer patch image corresponding to the color image, and a feature of the layer patch image is extracted, to obtain a palette feature, so that the palette feature is used as color guide information during feature encoding and decoding, a finally generated colored image not only has a sketch texture of the sketch image, but image regions in the colored image further have colors defined by the corresponding layer patches, thereby quickly implementing coloring of the sketch image.

In one embodiment, the color obtaining module 1606 is further configured to: perform layer patch segmentation on the color image according to the image regions in the color image, to obtain an initial layer patch image, where the initial layer patch image includes layer patches corresponding to the image regions; and obtain the layer patch image based on custom color adjustment on at least one of the layer patches in the initial layer patch image.

In this embodiment, random color filling is performed on the sketch image, to obtain a color image, so that layer patch segmentation can be performed on the color image according to image regions in the color image, to accurately segment layer patches in the color image. The layer patches form an initial layer patch image corresponding to the color image. The initial layer patch image includes layer patches respectively corresponding to the image regions in the sketch image. A user may adjust colors of the layer patches to redefine a desired color, thereby obtaining a user-defined layer patch image. In addition, the user-defined color is subsequently used as guide information during feature encoding and decoding, so that a finally generated colored image not only has a sketch texture of the sketch image, but image regions in the colored image further have colors filled by the user in the corresponding layer patches, thereby effectively generating a sketch image of a custom color.

In one embodiment, the apparatus further includes a description feature extraction module. The description feature extraction module is configured to: obtain an image description text for the sketch image; and extract an image description feature from the image description text.

The encoding module 1608 is configured to encode, for each scale among the multiple scales, the noise feature of the scale with reference to the sketch texture feature of the scale, the color guide information, and the image description feature, to obtain image features of the multiple scales.

In this embodiment, an image description text for the sketch image is obtained, to describe features of the sketch image by using the image description text, as supplementary information of the sketch image. An image description feature in the image description text is extracted. For each scale among the multiple scales, the noise feature of the scale is encoded with reference to the sketch texture feature of the scale, the color guide information, and the image description feature, so that an image feature obtained by encoding combines a sketch texture of the corresponding scale and a color indicated by the sketch texture feature. In addition, the image feature obtained by encoding further has feature information described by the image description feature, so that an image content not in the sketch image is obtained during encoding, or an originally unclear feature in the sketch image is changed to a clear feature with reference to the image description feature. In addition, encoding for multiple scales is performed, to obtain image features of the multiple scales. An image feature of a larger scale has more deep image information, and an image feature of a smaller scale has more shallow image information, so that image information of different levels can be obtained.

In one embodiment, the decoding module 1610 is further configured to: decode, for each scale in the multi-scale decoding and in a case that the scale is a first scale in the multi-scale decoding, the image feature of a last scale obtained by encoding with reference to the image feature of the scale, to obtain a decoding feature of the scale; decode, in a case that the scale is not the first scale or the last scale in the multi-scale decoding, a decoding feature of a previous scale of the scale with reference to the image feature of the scale, to obtain a decoding feature of the scale; and decode, in a case that the scale is the last scale, a decoding feature of a previous scale of the last scale with reference to the image feature of the scale, to obtain the colored image.

In this embodiment, for a multi-scale decoding process, during decoding of each scale, an image feature of the corresponding scale is used as a reference for decoding of the scale, so that an encoding feature can be used as a reference for decoding a decoding feature, thereby effectively avoiding a decoding error, and improving decoding accuracy. In addition, during decoding of different scales, a feature of decoding of each scale is a feature obtained by decoding of a previous scale, so that the decoding feature can be progressively decoded, to progressively reconstruct texture details and color information of an image, and accurately reconstruct a colored image having a sketch texture and a color.

Based on the same inventive concept, an embodiment of this application further provides an apparatus for training an image processing model, for implementing the foregoing method for training an image processing model. Implementation solutions provided by the apparatus for solving problems are similar to the implementation solutions described in the foregoing method. Therefore, for specific limitations in one or more embodiments of the apparatus for training an image processing model provided below, refer to the limitations on the method for training an image processing model in the foregoing descriptions. Details are not described herein again.

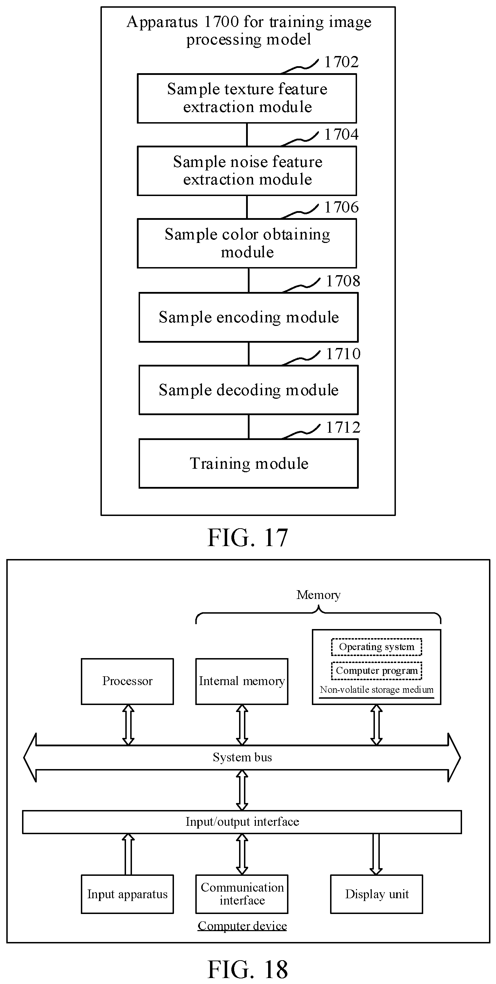

In one embodiment, as shown in FIG. 17, an apparatus 1700 for training an image processing model is provided, including:

a sample texture feature extraction module 1702, configured to obtain a sample sketch image, and extract sample sketch texture features of multiple scales from the sample sketch image;

a sample noise feature extraction module 1704, configured to obtain a sample noise image, and extract sample noise features of the multiple scales from the sample noise image;

a sample color obtaining module 1706, configured to determine sample color guide information corresponding to the sample sketch image;

a sample encoding module 1708, configured to encode, for each scale among the multiple scales, the sample noise feature of the scale with reference to the sample sketch texture feature of the scale and the sample color guide information, to obtain sample image features of the multiple scales;

a sample decoding module 1710, configured to perform multi-scale decoding on the sample image features of the multiple scales, to obtain a predicted colored image; and

a training module 1712, configured to obtain a label colored image corresponding to the sample sketch image, and train an initial image processing model based on the predicted colored image and the label colored image, to obtain an image processing model, where the label colored image has a sketch texture of the sample sketch image and has a color indicated by the sample color guide information.

In this embodiment, a sample sketch image is obtained, and sample sketch texture features of multiple scales are extracted based on the sample sketch image. The sample sketch texture feature of a large scale includes more low-level semantic features. The sample sketch texture feature of a small scale includes more high-level semantic features. Sample noise features of the multiple scales extracted from the sample noise image are obtained. The sample sketch texture features of the multiple scales and sample color guide information corresponding to the sample sketch image are used as guide information for encoding the sample noise features. For each scale among the multiple scales, the sample noise feature of the scale is encoded with reference to the sample sketch texture feature of the scale and the sample color guide information, thereby generating, by encoding, a sample image feature in which the sample sketch texture feature and a color indicated by the sample color guide information are combined. In addition, combination of the sample sketch texture and the color contributes to that a color in a subsequently generated image can conform to a direction of the sketch texture.

The encoding is multi-scale, and can obtain a sample image feature in which sample sketch texture features of different scales and the color are combined, to perform multi-scale decoding on sample image features of multiple scales, to obtain a predicted colored image. A label colored image corresponding to the sample sketch image is obtained, and the initial image processing model is trained based on a difference between the predicted colored image and the label colored image, to adjust a model parameter, so that the predicted colored image generated by the image processing model obtained by training has a sketch texture of the sample sketch image and has a color indicated by the sample color guide information. In addition, the image processing model obtained by training can generate a colored image with a clearer sketch texture and finer edge transition details, and matching between a color in the colored image and the sketch texture is more harmonious, thereby improving image quality of the colored image.

In one embodiment, the initial image processing model includes an initial sketch control unit. The initial sketch control unit is configured to extract sample sketch texture features of the multiple scales. The training module 1712 is further configured to: determine a texture loss between a sketch texture of the predicted colored image and the sketch texture of the label colored image; and train the initial sketch control unit of the initial image processing model based on the texture loss, to obtain an image processing model including a sketch control unit.

In this embodiment, the initial image processing model includes an initial sketch control unit, so that the initial sketch control unit is configured to extract sample sketch texture features of multiple scales. The initial sketch control unit of the initial image processing model is trained based on a texture loss, so as to independently train a unit for controlling sketch texture generation, and gradually reduce, during training, a texture difference between a predicted colored image and a label image that are outputted by the model, thereby improving accuracy of generating the sketch texture by the sketch control unit, and making the sketch texture of the obtained colored image more accurate.

In one embodiment, the initial image processing model includes an initial sketch control unit and an initial color control unit. The initial sketch control unit is configured to extract the sample sketch texture features of the multiple scales. The sample color guide information includes a sample palette image for customizing a color of the sample sketch image.

The sample color obtaining module 1706 is configured to extract a sample palette feature of the sample palette image by using the initial color control unit.

The sample encoding module 1708 is further configured to encode, for each scale among the multiple scales, the sample noise feature of the scale with reference to the sample sketch texture feature of the scale and the sample palette feature, to obtain sample image features of the multiple scales.

The training module 1712 is further configured to train the initial sketch control unit based on the texture loss, and train the initial color control unit based on the color loss, to obtain the image processing model including a sketch control unit and a color control unit.

In this embodiment, the initial image processing model includes an initial sketch control unit and an initial color control unit. The initial sketch control unit is trained based on a texture loss, and the initial color control unit is trained based on a color loss, so that training of the two units is independent of each other. The initial sketch control unit is trained based on the texture loss, to gradually reduce, during training, a texture difference between a predicted colored image and a label image that are outputted by the model, thereby improving accuracy of generating the sketch texture by the sketch control unit, and making the sketch texture of the obtained colored image more accurate. The initial color control unit is trained based on the color loss between the predicted colored image and the label colored image, to gradually reduce, during training, a color difference between the predicted colored image and the label image that are outputted by the model, and improve accuracy of coloring, by the color control unit, the sketch image.

In one embodiment, the initial image processing model further includes an initial color control unit. The sample color guide information includes a sample palette image for customizing a color of the sample sketch image. The initial color control unit is configured to extract a sample palette feature of the sample palette image.

The training module 1712 is further configured to train the initial sketch control unit based on the texture loss, to obtain a sketch control unit. The sketch control unit is configured to: extract sample sketch texture features of multiple scales; encode, for each scale among the multiple scales, a sample noise feature of the scale with reference to the sample sketch texture feature of the scale and a sample palette feature, to obtain sample image features of the multiple scales; perform multi-scale decoding on the sample image features of the multiple scales, to obtain a predicted colored image; and determine a color loss between the predicted colored image and a label colored image, and train the initial color control unit based on the texture loss, to obtain an image processing model including a sketch control unit and a color control unit.

In this embodiment, the initial sketch control unit is trained based on the texture loss, to obtain the sketch control unit. Therefore, the initial color control unit is trained after the sketch control unit is obtained by training, so that training of the two units is independent of each other. The sketch control unit extracts sample sketch texture features of multiple scales, encodes, for each scale among the multiple scales, a sample noise feature of the scale with reference to the sample sketch texture feature of the scale and a sample palette feature, to obtain sample image features of the multiple scales, performs multi-scale decoding on the sample image features of the multiple scales, to obtain a predicted colored image, determines a color loss between the predicted colored image and a label colored image, and trains the initial color control unit based on the texture loss, to obtain an image processing model including a sketch control unit and a color control unit, so that the trained sketch control unit and color control unit are independent of each other. Therefore, in an application scenario of the image processing model, the sketch control unit may be separately invoked to accurately generate a colored image having a sketch texture and a random color. The color control unit may accurately generate the colored image having the sketch texture and a custom color with reference to user-defined color information, so that the image processing model can adapt to different use scenarios.

In one embodiment, the training module 1712 is further configured to: determine a sketch texture of the predicted colored image, and determine a texture loss between the sketch texture of the predicted colored image and the sketch texture of the label colored image; determine a color loss between a color of the predicted colored image and a color of the label colored image; and train the initial image processing model according to the texture loss and the color loss, to obtain the image processing model.

In this embodiment, the texture loss and the color loss between the predicted colored image and the label colored image that are generated by the model are considered, to adjust a model parameter for generating the sketch texture and a model parameter for generating the color, so as to gradually reduce the texture loss and the color loss during training, thereby obtaining the image processing model that can accurately generate the sketch texture and the color.

The modules in the image processing apparatus and the apparatus for training an image processing model may be implemented in whole or in part by software, hardware, and a combination thereof. The foregoing modules may be built in or independent of a processor of a computer device in a form of hardware, or may be stored in a memory of the computer device in a form of software, for the processor to invoke to execute operations corresponding to the foregoing modules.

In one embodiment, a computer device is provided. The computer device may be a terminal or a server. An internal structure diagram of the terminal, for example, may be shown in FIG. 18. The computer device includes a processor, a memory, an input/output interface, a communication interface, a display unit, and an input apparatus. The processor, the memory, and the input/output interface are connected via a system bus. The communication interface, the display unit, and the input apparatus are connected to the system bus via the input/output interface. The processor of the computer device is configured to provide computing and control capabilities. The memory of the computer device includes a non-volatile storage medium and an internal memory. The non-volatile storage medium stores an operating system and a computer program. The internal memory provides an operating environment for the operating system and the computer program in the non-volatile storage medium. The input/output interface of the computer device is configured to exchange information between the processor and an external device. The communication interface of the computer device is configured to communicate with an external terminal in a wired or wireless mode. The wireless mode may be implemented through WIFI, a mobile cellular network, near field communication (NFC), or another technology. The computer program, when executed by the processor, implements an image processing method, and may further implement a method for training an image processing model. The display unit of the computer device is configured to form a visible picture, and may be a display screen, a projection apparatus, or a virtual reality imaging apparatus. The display screen may be a liquid crystal display screen or an e-ink display screen. The input apparatus of the computer device may be a touch layer covering the display screen, or may be a button, a trackball, or a touchpad disposed on a housing of the computer device, or may be an external keyboard, touchpad, mouse, or the like.

The structure shown in FIG. 18 is merely a block diagram of a partial structure related to a solution in this application, and does not constitute a limitation to the computer device to which the solution in this application is applied. Specifically, the computer device may include more or fewer components than those shown in the figure, or some components may be combined, or a different component layout may be used.

In one embodiment, a computer device is further provided. The computer device includes a memory and a processor. The memory has a computer program stored therein. The processor, when executing the computer program, implements the operations in the foregoing method embodiments.

In one embodiment, a computer-readable storage medium is provided. The computer-readable storage medium has a computer program stored therein. The computer program, when executed by a processor, implements the operations in the foregoing method embodiments.

In one embodiment, a computer program product is provided, including a computer program. The computer program, when executed by a processor, implements the operations in the foregoing method embodiments.

User information (including, but not limited to, user equipment information, user personal information, and the like) and data (including, but not limited to, data for analysis, stored data, displayed data, and the like) involved in this application are all information and data authorized by users or fully authorized by all parties, and collection, use, and processing of relevant data need to comply with relevant laws, regulations, and standards of relevant countries and regions.

All or some of the procedures of the methods in the foregoing embodiments may be implemented by a computer program instructing relevant hardware. The computer program may be stored in a non-volatile computer-readable storage medium. When the computer program is executed, the procedures of the foregoing method embodiments may be included. Any reference to a memory, a database, or another medium used in the embodiments provided in this application may include at least one of a non-volatile memory or a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, or the like. The volatile memory may include a random access memory (RAM) and an external cache. As an illustration rather than a limitation, the RAM is available in various forms, such as a static random access memory (SRAM) or a dynamic random access memory (DRAM). The database involved in the embodiments provided in this application may include at least one of a relational database and a non-relational database. The non-relational database may include a blockchain-based distributed database, or the like, but is not limited thereto. The processor involved in the embodiments provided in this application may be a general-purpose processor, a central processing unit, a graphics processing unit, a digital signal processor, a programmable logic device, a quantum computing-based data processing logic device, or the like, but is not limited thereto.

The technical features of the foregoing embodiments may be randomly combined. To make description concise, not all possible combinations of the technical features in the foregoing embodiments are described. However, the combinations of these technical features shall be considered as falling within the scope recorded by this specification provided that no conflict exists.

The foregoing embodiments only describe several implementations of this application, which are described specifically and in detail, but cannot be construed as a limitation to the patent scope of this application. For a person of ordinary skill in the art, several transformations and improvements may be made without departing from the conception of this application. These transformations and improvements belong to the protection scope of this application. Therefore, the protection scope of the patent of this application shall be subject to the appended claims.

## Claims

1. An image processing method, performed by a computer device, the method comprising:

   obtaining a sketch image, and extracting multi-scale texture features from the sketch image;
   obtaining a preset noise image, and extracting multi-scale noise features from the noise image;
   determining color information indicating coloring of the sketch image;
   encoding, for each scale in the multi-scale, a noise feature with a scale of the multi-scale noise features according to a texture feature with the scale of the multi-scale texture features and the color information, to obtain multi-scale image features; and

performing multi-scale decoding on the multi-scale image features, to obtain a colored image having a sketch texture of the sketch image and having a color indicated by the color information.

2. The method according to claim 1, wherein the color information comprises a custom palette image, and the custom palette image is configured for customizing a color of the sketch image; and the encoding, for each scale in the multi-scale, a noise feature with a scale of the multi-scale noise features according to a texture feature with the scale of the multi-scale texture features and the color information, to obtain multi-scale image features comprises:

extracting a palette feature of the custom palette image; and

encoding, for each scale in the multi-scale, the noise feature with the scale according to the texture feature of the scale and the palette feature, to obtain the multi-scale image features.

3. The method according to claim 2, wherein the extracting a palette feature of the custom palette image comprises:

extracting palette features of at least two different scales from the custom palette image, a scale quantity corresponding to the at least two different scales being less than a scale quantity corresponding to the multi-scale; and

the encoding, for each scale in the multi-scale, the noise feature with the scale according to the texture feature of the scale and the palette feature, to obtain the multi-scale image features comprises:

encoding, for each scale in the multi-scale and in the presence of a palette feature of the scale, the noise feature with the scale according to the texture feature of the scale and the palette feature, to obtain the image feature of the scale; and

encoding, in the absence of the palette feature of the scale, the noise feature with the scale according to the texture feature of the scale, to obtain the image feature of the scale.

4. The method according to claim 2 or 3, wherein the custom palette image comprises a grid patch image corresponding to the sketch image, the method further comprising:

obtaining a palette template divided according to grid patches, and performing grid division on the sketch image according to the grid patches divided by the palette template, to obtain grid regions in the sketch image, the grid patches in the sketch image being in a one-to-one correspondence with the grid regions in the sketch image; and obtaining a grid patch image corresponding to the palette template, the grid patch image being obtained by performing custom color filling on each grid patch in the palette template, and the grid patch being configured for defining a color of the corresponding grid region in the sketch image, wherein the colored image has the sketch texture of the sketch image, and the grid regions in the colored image have colors defined by the corresponding grid patches in the grid patch image.

5. The method according to any one of claims 2 to 4, wherein the custom palette image comprises a layer patch image corresponding to the sketch image, the method further comprising:

performing random color filling on the sketch image to obtain a color image; and

performing layer patch segmentation on the color image according to image regions in the color image, to obtain the layer patch image corresponding to the sketch image, the layer patch image comprising a layer patch corresponding to each image region, wherein the colored image has the sketch texture of the sketch image, and the image regions in the colored image have colors indicated by the corresponding layer patches in the layer patch image.

6. The method according to claim 5, wherein the performing layer patch segmentation on the color image according to image regions in the color image, to obtain the layer patch image corresponding to the sketch image comprises:

performing layer patch segmentation on the color image according to the image regions in the color image, to obtain an initial layer patch image, the initial layer patch image comprising layer patches corresponding to the image regions; and

obtaining the layer patch image based on custom color adjustment on at least one of the layer patches in the initial layer patch image.

7. The method according to any one of claims 1 to 6, wherein the method further comprises:

   obtaining an image description text for the sketch image; and
   extracting an image description feature from the image description text; and
   the encoding, for each scale in the multi-scale, the noise feature with the scale according to the texture feature of the scale and the palette feature, to obtain the multi-scale image features comprises:
   encoding, for each scale in the multi-scale, the noise feature with the scale according to the texture feature of the scale, the color information, and the image description feature, to obtain the multi-scale image features.

8. The method according to any one of claims 1 to 7, wherein the performing multi-scale decoding on the multi-scale image features, to obtain a colored image comprises:

   decoding, for each scale in the multi-scale decoding and in a case that the scale is a first scale in the multi-scale decoding, the image feature of a last scale obtained by encoding according to the image feature of the scale, to obtain a decoding feature of the scale;
   decoding, in a case that the scale is not the first scale or the last scale in the multi-scale decoding, a decoding feature of a previous scale of the scale according to the image feature of the scale, to obtain a decoding feature of the scale; and
   decoding, in a case that the scale is the last scale, a decoding feature of a previous scale of the last scale according to the image feature of the scale, to obtain the colored image.

9. A method for training an image processing model, performed by a computer device, the method comprising:

   obtaining a sample sketch image, and extracting sample multi-scale texture features from the sample sketch image;
   obtaining a sample noise image, and extracting sample multi-scale noise features from the sample noise image;
   determining sample color information indicating coloring of the sample sketch image;
   encoding, for each scale in the multi-scale, a sample noise feature with a scale of the multi-scale noise features according to the sample texture feature with the scale of the multi-scale noise features and the sample color information, to obtain sample multi-scale image features;
   performing multi-scale decoding on the sample multi-scale image features, to obtain a predicted colored image; and
   obtaining a label colored image corresponding to the sample sketch image, and training an initial image processing model based on the predicted colored image and the label colored image, to obtain an image processing model, the label colored image having a sketch texture of the sample sketch image and having a color indicated by the sample color information.

10. The method according to claim 9, wherein the training an initial image processing model based on the predicted colored image and the label colored image, to obtain an image processing model comprises:

    determining a sketch texture of the predicted colored image, and determining a texture loss between the sketch texture of the predicted colored image and the sketch texture of the label colored image;
    determining a color loss between a color of the predicted colored image and a color of the label colored image; and
    training the initial image processing model according to the texture loss and the color loss, to obtain the image processing model.

11. The method according to claim 10, wherein the initial image processing model comprises an initial sketch control unit and an initial color control unit, the initial sketch control unit is configured to extract the sample multi-scale texture features, and the sample color information comprises a sample palette image for customizing a color of the sample sketch image;
    the encoding, for each scale in the multi-scale, a sample noise feature with a scale of the multi-scale noise features according to the sample texture feature with the scale of the multi-scale noise features and the sample color information, to obtain sample multi-scale image features comprises:

    extracting a sample palette feature of the sample palette image by using the initial color control unit; and
    encoding, for each scale in the multi-scale, the sample noise feature with the scale according to the sample texture feature with the scale and the sample palette feature, to obtain the sample multi-scale image features; and
    the training the initial image processing model according to the texture loss and the color loss, to obtain the image processing model comprises:
training the initial sketch control unit based on the texture loss, and training the initial color control unit based on the color loss, to obtain the image processing model comprising a sketch control unit and a color control unit.

12. An image processing apparatus, comprising:

a texture feature extraction module, configured to obtain a sketch image, and extract multi-scale texture features from the sketch image;
a noise feature extraction module, configured to obtain a preset noise image, and extract multi-scale noise features from the noise image;
a color obtaining module, configured to determine color information indicating coloring of the sketch image;
an encoding module, configured to encode, for each scale in the multi-scale, a noise feature with a scale of the multi-scale noise features according to a texture feature with the scale of the multi-scale texture features and the color information, to obtain multi-scale image features; and
a decoding module, configured to perform multi-scale decoding on the multi-scale image features, to obtain a colored image having a sketch texture of the sketch image and having a color indicated by the color information.

13. An apparatus for training an image processing model, comprising:

a sample texture feature extraction module, configured to obtain a sample sketch image, and extract sample multi-scale texture features from the sample sketch image;
a sample noise feature extraction module, configured to obtain a sample noise image, and extract sample multi-scale noise features from the sample noise image;
a sample color obtaining module, configured to determine sample color information indicating coloring of the sample sketch image;
a sample encoding module, configured to encode, for each scale in the multi-scale, a sample noise feature with a scale of the multi-scale noise features according to the sample texture feature with the scale of the multi-scale noise features and the sample color information, to obtain sample multi-scale image features;
a sample decoding module, configured to perform multi-scale decoding on the sample multi-scale image features, to obtain a predicted colored image; and
a training module, configured to obtain a label colored image corresponding to the sample sketch image, and training an initial image processing model based on the predicted colored image and the label colored image, to obtain an image processing model, the label colored image having a sketch texture of the sample sketch image and having a color indicated by the sample color information.

14. A computer device, comprising a memory and a processor, the memory having a computer program stored therein, and the processor, when executing the computer program, implementing the operations of the method according to any one of claims 1 to 11.

15. A computer-readable storage medium, having a computer program stored therein, the computer program, when executed by a processor, implementing the operations of the method according to any one of claims 1 to 11.

16. A computer program product, comprising a computer program, the computer program, when executed by a processor, implementing the operations of the method according to any one of claims 1 to 11.

FIG. 1

S202

Obtain a sketch image, and extract sketch texture features of multiple scales based on the sketch image

S204

Obtain a preset noise image, and extract noise features of the multiple scales from the preset noise image

S206

Determine color guide information corresponding to the sketch image

S208

Encode, for each scale among the multiple scales, the noise feature of the scale with reference to the sketch texture feature of the scale and the color guide information, to obtain image features of the multiple scales

S210

Perform multi-scale decoding on the image features of the multiple scales, to obtain a colored image, where the colored image has a sketch texture of the sketch image and has a color indicated by the color guide information

FIG. 2

Custom
palette image

Sketch image

Preset noise image

Encode

Color control
unit

Decode

Sketch control unit

Image generation unit

Colored
image

FIG. 3

Custom
palette
image
(1, 192, 64, 64)

Residual block

Residual block

Residual
block

(1, 320, 32, 32)
Palette feature

(1, 640, 16, 16)
Palette feature

(1, 1280, 8, 8)
Palette feature

FIG. 4

Sketch image

Correspondence
between grid regions
and grid patches

Grid patch image

## FIG. 5

S602

Perform random color filling on a sketch image to obtain a color image

S604

Perform image segmentation and layer patch segmentation processing on the color image according to image regions in the color image, to obtain an initial layer patch image corresponding to the sketch image, where the initial layer patch image includes layer patches respectively corresponding to image regions in the sketch image

S606

Obtain a layer patch image based on custom color adjustment on at least one of the layer patches in the initial layer patch image

## FIG. 6

Sketch image          Initial layer patch image

FIG. 7

FIG. 8

S902

Obtain a sample sketch image, and extract sample sketch texture features of multiple scales based on the sample sketch image

S904

Obtain a sample noise image, and extract sample noise features of the multiple scales from the sample noise image

S906

Determine sample color guide information corresponding to the sample sketch image

S908

Encode, for each scale among the multiple scales, the sample noise feature of the scale with reference to the sample sketch texture feature of the scale and the sample color guide information, to obtain sample image features of the multiple scales

S910

Perform multi-scale decoding on the sample image features of the multiple scales, to obtain a predicted colored image

S912

Obtain a label colored image corresponding to the sample sketch image, and train an initial image processing model based on the predicted colored image and the label colored image, to obtain an image processing model, where the label colored image has a sketch texture of the sample sketch image and has a color indicated by the sample color guide information

FIG. 9

## Conventional diffusion model

**Pixel space**
- Input → Conversion
- Output ← Conversion

**Hidden space**
- Diffusion process
- **Denoising unit**
  - Query, key, and value
  - Query, key, and value
  - Query, key, and value
  - Query, key, and value
- Noise image
- Noise image

**Condition**
- Semantic mapping
- Text
- Representation
- Image
- Feature

Replace

**Color control unit** — Custom palette image

**Image generation unit** — Colored image — Preset noise image

**Sketch control unit** — Sketch image

FIG. 10

FIG. 11

Sketch image          Colored image 1          Colored image 2

FIG. 12

| Sketch image | Grid patch image | Colored image 3 | Colored image 4 |

FIG. 13

| Sketch image | Layer patch image | Colored image 5 | Colored image 6 |

FIG. 14

| Sketch image | Custom palette image | Colored image | Adjusted palette image | Adjusted colored image |
|---|---|---|---|---|

Adjust patch colors with reference to a mask

Adjust patch colors with reference to a mask

## FIG. 15

Image processing apparatus 1600

1602

Texture feature extraction module

1604

Noise feature extraction module

1606

Color obtaining module

1608

Encoding module

1610

Decoding module

## FIG. 16

Apparatus 1700 for training image
processing model

1702

Sample texture feature
extraction module

1704

Sample noise feature
extraction module

1706

Sample color obtaining
module

1708

Sample encoding module

1710

Sample decoding module

1712

Training module

FIG. 17

Memory

Operating system

Computer program

Non-volatile storage medium

Processor

Internal memory

System bus

Input/output interface

Input apparatus

Communication
interface

Display unit

Computer device

FIG. 18

## INTERNATIONAL SEARCH REPORT

| International application No. |
| --- |
| **PCT/CN2024/087793** |

**A.    CLASSIFICATION OF SUBJECT MATTER**

G06T11/40(2006.01)i

According to International Patent Classification (IPC) or to both national classification and IPC

**B.    FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNABS, CNTXT, VEN, EPTXT, WOTXT, CNKI, IEEE: 线稿图像, 上色, 颜色, 纹理, 特征, 噪声, 多尺度, 编码, 解码, 引导信息, line-drawing, colour, texture, character, noise, multi-scale, code, decode, guidance information

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 116416342 A (TENCENT TECHNOLOGY (SHENZHEN) CO., LTD.) 11 July 2023 (2023-07-11)<br>claims 1-15, and description, paragraphs [0004]-[0227] | 1-16 |
| A | CN 115953597 A (BEIJING BYTEDANCE NETWORK TECHNOLOGY CO., LTD.) 11 April 2023 (2023-04-11)<br>description, paragraphs [0034]-[0064] | 1-16 |
| A | CN 108615252 A (SOOCHOW UNIVERSITY) 02 October 2018 (2018-10-02)<br>entire document | 1-16 |
| A | CN 114387365 A (UNIVERSITY OF SCIENCE AND TECHNOLOGY BEIJING) 22 April 2022 (2022-04-22)<br>entire document | 1-16 |
| A | CN 115937356 A (BEIJING BYTEDANCE NETWORK TECHNOLOGY CO., LTD.) 07 April 2023 (2023-04-07)<br>entire document | 1-16 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 June 2024** | **28 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/087793**

**C.    DOCUMENTS CONSIDERED TO BE RELEVANT**

| Category* | Citation of document, with indication, where appropriate, of the relevant passages | Relevant to claim No. |
|---|---|---|
| A | US 2009116070 A1 (KONICA MINOLTA BUSINESS TECHNOLOGIES, INC.) 07 May 2009 (2009-05-07) entire document | 1-16 |

Form PCT/ISA/210 (second sheet) (July 2022)

## INTERNATIONAL SEARCH REPORT
### Information on patent family members

International application No.

**PCT/CN2024/087793**

| Patent document cited in search report | | | Publication date (day/month/year) | Patent family member(s) | | | Publication date (day/month/year) |
|---|---|---|---|---|---|---|---|
| CN | 116416342 | A | 11 July 2023 | None | | | |
| CN | 115953597 | A | 11 April 2023 | None | | | |
| CN | 108615252 | A | 02 October 2018 | None | | | |
| CN | 114387365 | A | 22 April 2022 | None | | | |
| CN | 115937356 | A | 07 April 2023 | None | | | |
| US | 2009116070 | A1 | 07 May 2009 | WO | 2007132652 | A1 | 22 November 2007 |
| | | | | JPWO | 2007132652 | A1 | 24 September 2009 |
| | | | | JP | 4900386 | B2 | 21 March 2012 |
| | | | | US | 8174728 | B2 | 08 May 2012 |
| | | | | EP | 2023599 | A1 | 11 February 2009 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310687711X